(19) Europäisches Patentamt
European Patent Office
Office européen des brevets

(11) **EP 4 022 731 B1**

(12) **EUROPÄISCHE PATENTSCHRIFT**

(45) Veröffentlichungstag und Bekanntmachung des Hinweises auf die Patenterteilung:
**06.12.2023   Patentblatt 2023/49**

(21) Anmeldenummer: **20760451.3**

(22) Anmeldetag: **20.08.2020**

(51) Internationale Patentklassifikation (IPC):
**H02J 3/00** *(2006.01)*        **H02J 3/32** *(2006.01)*

(52) Gemeinsame Patentklassifikation (CPC):
**H02J 3/32; H02J 3/003; H02J 3/004;**
H02J 2300/28; Y02E 10/56; Y02E 10/72;
Y04S 10/50

(86) Internationale Anmeldenummer:
**PCT/EP2020/073416**

(87) Internationale Veröffentlichungsnummer:
**WO 2021/037690 (04.03.2021 Gazette 2021/09)**

(54) **VERFAHREN ZUM BETREIBEN EINER ELEKTRISCHEN SPEICHERSTATION**

METHOD FOR OPERATING AN ELECTRICAL STORAGE STATION

PROCÉDÉ POUR FAIRE FONCTIONNER UNE STATION DE STOCKAGE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.08.2019   DE 102019123383**

(43) Veröffentlichungstag der Anmeldung:
**06.07.2022   Patentblatt 2022/27**

(73) Patentinhaber: **Wobben Properties GmbH**
**26607 Aurich (DE)**

(72) Erfinder:
• **GAMBOA, Daniel**
**26603 Aurich (DE)**
• **ENGELKEN, Sönke**
**28215 Bremen (DE)**
• **AL KHATIB, Aubai**
**26603 Aurich (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
WO-A1-2017/045698        WO-A1-2018/078086
US-A1- 2014 200 723        US-A1- 2017 317 521

## Beschreibung

Die vorliegende Erfindung betrifft ein Verfahren zum Betreiben einer elektrischen Speicherstation an einem elektrischen Versorgungsnetz. Außerdem betrifft die vorliegende Erfindung eine Speicherstation.

Elektrische Speicherstationen, von denen die vorliegende Erfindung ausgeht, können elektrische Leistung an einem elektrischen Versorgungsnetz bereitstellen, nämlich bei Bedarf einspeisen. Besondere Bedeutung haben elektrische Speicherstationen, wenn sie in einem sogenannten Inselnetz betrieben werden. Ein elektrisches Versorgungsnetz bezeichnet man dann als Inselnetz, wenn es vergleichsweise klein und abgeschlossen ist. Häufig kann dabei ein Inselnetz tatsächlich auch auf einer geografischen Insel oder Inselgruppe abgeschlossen existieren und betrieben werden, wie beispielsweise auf den Färöer-Inseln.

Idealerweise werden solche Inselnetze überwiegend mit regenerativer Energie betrieben. Besonders Windenergieanlagen und Photovoltaikanlagen speisen dann elektrische Leistung in das elektrische Versorgungsnetz ein, die wetter- und tageszeitlich bedingt starken Schwankungen unterliegen können. Solche Leistungsschwankungen können durch elektrische Speicherstationen, die der vorliegenden Erfindung zu Grunde liegen, ausgeglichen werden. Zusätzlich werden fossile Brennstoffe zur Leistungserzeugung eingesetzt, besonders mithilfe eines oder mehrerer Dieselgeneratoren, um Energie bereitzustellen, die von den regenerativen Quellen nicht geliefert werden kann.

Ein solches Inselnetz kann beispielsweise so betrieben werden, dass ein Teil der Leistung durch fossile Brennstoffe erzeugt wird, ein weiterer Teil der Leistung durch den regenerativen Erzeuger und Schwankungen der erzeugten Leistung der regenerativen Erzeuger durch die Speicherstation ausgeglichen werden. Wenn dauerhaft weniger Leistung durch die regenerativen Erzeuger eingespeist werden kann, als benötigt wird, kann diese zusätzlich benötigte Leistung durch die genannten fossilen Brennstoffe erzeugt werden. Dadurch wird auch verhindert, dass die Speicherstation durch diesen erhöhten Leistungsbedarf ihre gesamte gespeicherte Energie abgibt und dann Schwankungen der durch die regenerativen Erzeuger eingespeisten Leistung nicht mehr oder nur eingeschränkt ausgleichen kann.

Ein Regelungskonzept kann so aussehen, dass versucht wird, die Speicherstation etwa auf einem mittleren Ladezustand zu halten. Die Speicherstation hat dann also etwa halb so viel Energie gespeichert, wie sie aufgrund ihrer Speicherkapazität speichern könnte. Mit einem solchen mittleren Ladezustand kann sowohl eine Leistungserhöhung als auch eine Leistungsverringerung der regenerativen Erzeuger ausgeglichen werden, denn zum Ausgleichen einer Leistungserhöhung muss die Speicherstation Leistung aufnehmen, weswegen sie nicht voll geladen sein darf, wohingegen sie bei einer Leistungsverringerung der regenerativen Erzeuger Leistung abgeben muss und daher nicht vollständig entladen sein darf.

Tatsächlich ist es aber häufig so, dass die Leistung der regenerativen Erzeuger nicht genau um einen festen Mittelwert schwankt, sondern beispielsweise tendenziell ansteigt, weil z.B. der Wind ansteigt, oder tendenziell abfällt, weil beispielsweise der Wind abfällt, um nur ein Beispiel zu nennen. Fällt also beispielsweise die Leistung der regenerativen Erzeuger in einer Situation tendenziell ab, wäre ein mehr als 50% geladener Ladezustand der Speicherstation wünschenswert. Selbst wenn ein solches Szenario frühzeitig bekannt wäre, wenn also frühzeitig bekannt wäre, dass die elektrische Leistung, die regenerativen Erzeuger in das Inselnetz einspeisen, abfällt, ist dennoch ein entsprechendes Aufladen der Speicherstation im Hinblick auf eine solche zu erwartende Situation nicht oder nicht ohne weiteres möglich.

Zunächst stellt sich die Frage, wo eine solche zum Laden der Speicherstation notwendige Energie herkommen soll. Eine Möglichkeit wäre, einen Dieselgenerator entsprechend stark zu betreiben, um ein solches Aufladen der Speicherstation zu erreichen. Für einen solchen Dieselgenerator ist es aber häufig nicht wünschenswert, diesen mit hoher Leistung zu betreiben, denn dadurch kann sich sein Verschleiß erhöhen und seine Lebensdauer verringern. Zudem sind auch schnelle Lastwechsel für einen solchen Dieselgenerator, oder andere auf fossilen Brennstoffen basierende Erzeugungseinheit, nicht zu empfehlen.

Das Deutsche Patent- und Markenamt hat in der Prioritätsanmeldung zu vorliegender Anmeldung folgenden Stand der Technik recherchiert: WO 2011/140111 A2; DE 10 2014 221 555 A1; US 2011/0221276 A1; US 2014/0184136 A1; US 2019/0052088 A1; EP 3 007 302 A1; US 2018/0223804 A1.

Das Dokument US 2014/200723 A1 offenbart ein Verfahren zum Betreiben einer elektrischen Speicherstation an einem elektrischen Versorgungsnetz gemäß dem Oberbegriff des Anspruchs 1.

Der vorliegenden Erfindung liegt somit die Aufgabe zugrunde, zumindest eines der vorstehend genannten Probleme zu adressieren. Insbesondere soll eine Lösung vorgeschlagen werden, bei der eine elektrische Speicherstation einen möglichst situationsangepassten Ladezustand aufweist, der gleichzeitig aber mit möglichst geringer Belastung erreicht werden kann, während gleichzeitig Schwankungen der regenerativen Quellen ausgeglichen werden. Zumindest soll zu bisher bekannten Lösungen eine alternative Lösung vorgeschlagen werden.

Erfindungsgemäß wird ein Verfahren zum Betreiben einer elektrischen Speicherstation gemäß Anspruch 1 vorgeschlagen. Somit wird eine elektrische Speicherstation an einem elektrischen Versorgungsnetz betrieben. Vorzugsweise ist das elektrische Versorgungsnetz ein Inselnetz, das dadurch gekennzeichnet ist, dass die Summe der Nennleistungen sämtlicher Erzeuger unter 1 GW liegt.

Jedenfalls weist das elektrische Versorgungsnetz neben elektrischen Verbrauchern wenigstens die elektrische Speicherstation auf, zum Aufnehmen und Abgeben elektrischer Speicherleistung. Es können auch mehrere Speicherstationen vorgesehen sein.

Außerdem weist das elektrische Versorgungsnetz wenigstens eine Windenergieanlage auf, um elektrische Leistung aus Wind zu erzeugen und zumindest teilweise einzuspeisen. Das Verfahren umfasst die folgenden Schritte.

Ein Schritt besteht darin, elektrische Leistung durch die wenigstens eine Windenergieanlage zu erzeugen. Diese so erzeugte Leistung wird als erzeugte Windleistung bezeichnet. Ein weiterer Schritt besteht darin, eine Einspeiseleistung in das elektrische Versorgungsnetz einzuspeisen. Diese elektrische Einspeiseleistung ergibt sich wenigstens aus der erzeugten Windleistung und einer von der Speicherstation aufgenommenen oder abgegebenen Speicherleistung. Gibt die Speicherstation also Speicherleistung ab, ergibt sich die elektrische Einspeiseleistung als Summe der Beträge der erzeugten Windleistung und der von der Speicherstation abgegebenen Speicherleistung. Nimmt die Speicherstation Speicherleistung auf, ergibt sich die elektrische Einspeiseleistung wenigstens aus der erzeugten Windleistung abzüglich der von der Speicherstation aufgenommenen Speicherleistung.

Weiterhin wird vorgeschlagen, dass das Einspeisen der Einspeiseleistung in das elektrische Versorgungsnetz in Abhängigkeit eines Ladezustands der Speicherstation erfolgt, und dass es in Abhängigkeit einer Windprognose und/oder einer Leistungsprognose gesteuert wird. Besonders wird hier vorgeschlagen, dass eine Windprognose berücksichtigt wird und beispielsweise berücksichtigt wird, ob mit zunehmendem Wind oder abnehmendem Wind zu rechnen ist, um ein Beispiel zu nennen. Ist beispielsweise mit abnehmendem Wind zu rechnen, kann das Einspeisen der Einspeiseleistung so erfolgen, dass sich der Ladezustand der Speicherstation erhöht. Mit anderen Worten kann dann beispielsweise weniger als die erzeugte Windleistung in das elektrische Versorgungsnetz eingespeist werden. Die Speicherstation nimmt dann also Speicherleistung auf. Das erfolgt dabei ebenfalls abhängig des Ladezustandes. Ist beispielsweise der Ladezustand hoch, kann das Einspeisen der Einspeiseleistung so gesteuert werden, dass die Speicherstation nur wenig Speicherleistung aufnimmt, um ein weiteres Beispiel zu nennen.

Anstelle der Windprognose kann auch eine Leistungsprognose verwendet werden. In diesem Fall fließt statt einer meteorologischen Information über den Wind bereits eine abgeleitete Größe ein, nämlich die Leistungsprognose als zu erwartende Leistung. Die Leistungsprognose kann sich aus einer Windprognose ableiten, es kommt aber auch in Betracht, dass eine Leistungsprognose unmittelbar als eine zu erwartende Leistung oder Leistungsänderung aufgenommen wird. Es kommt auch eine Kombination in Betracht, bei der beispielsweise aus einer Wetterprognose eine Leistungsprognose abgeleitet wird und diese durch aktuelle Leistungswerte der betreffenden Windenergieanlage oder Windenergieanlagen abgeglichen wird.

Für das Einspeisen der Einspeiseleistung wird weiter vorgeschlagen, dass dies so erfolgt, dass zeitliche Änderungen der Einspeiseleistung in Abhängigkeit der Windprognose und/oder der Leistungsprognose gesteuert werden und dass für die Veränderungen der Einspeiseleistung wenigstens ein Grenzgradient vorgegeben wird, um die Änderungen der Einspeiseleistung darauf zu begrenzen und wobei der wenigstens einen Grenzgradient in Abhängigkeit der Windprognose und/oder der Leistungsprognose vorgegeben wird.

Somit wird vorgeschlagen, dass nicht Absolutwerte der Einspeiseleistung gesteuert werden, sondern zeitliche Änderungen und dass dies in Abhängigkeit der Windprognose und/oder der Leistungsprognose erfolgt. Dafür wird wenigstens ein Grenzgradient vorgegeben. Ein solcher Grenzgradient bezeichnet somit die betragsmäßig maximal zulässige zeitliche Änderung der Einspeiseleistung. Ein solcher Grenzgradient kann grafisch als mit der Zeit ansteigende Flanke dargestellt werden, wenn er eine positive Änderung der Einspeiseleistung begrenzt und er kann als zeitlich absteigende Flanke dargestellt werden, wenn er eine negative zeitliche Änderung der Einspeiseleistung dem Betrage nach begrenzt. Vorzugsweise sind ein positiver Grenzgradient und ein negativer Grenzgradient vorgesehen. Der positive Grenzgradient beschränkt somit positive Änderungen und der negative Grenzgradient beschränkt somit negative Änderungen dem Betrage nach.

Dazu ist weiter vorgesehen, dass der wenigstens eine Grenzgradient in Abhängigkeit der Windprognose und/oder der Leistungsprognose vorgegeben wird. Der wenigstens eine Grenzgradient, insbesondere der positive Grenzgradient und der negative Grenzgradient sind somit nicht fest vorgegeben, sondern veränderlich. Soll beispielsweise bei einer Windprognose, die einen abfallenden Wind prognostiziert, bzw. bei einer Leistungsprognose, die eine abfallende Windleistung prognostiziert, das Einspeisen der Einspeiseleistung so gesteuert werden, dass sich der Ladezustand der Speicherstation erhöht, kann dies durch die Vorgabe des wenigstens einen Grenzgradienten erreicht werden. Dafür kann beispielsweise ein positiver Grenzgradient vorgegeben werden, der ein zu schnelles Ansteigen der Einspeiseleistung verhindert bzw. der das Ansteigen der Einspeiseleistung begrenzt. Das kann dann den Effekt haben, dass die Einspeiseleistung nicht so stark ansteigt, wie sie dies ohne den beispielhaft genannten positiven Grenzgradienten machen würde. Dadurch ergibt sich ein Leistungsüberschuss, der nämlich aufgrund des beispielhaft genannten positiven Grenzgradienten nicht eingespeist wird und der damit den Ladezustand der Speicherstation erhöht.

Eine Änderung der Einspeiseleistung kann besonders durch das Verhalten der Verbraucher des elektrischen Versorgungsnetzes hervorgerufen werden. Die Speicherstation kann solche Änderungen des Leistungsbedarfs durch die Verbraucher ausgleichen. Insoweit sie solche Änderungen des Leistungsbedarfs durch die Verbraucher nicht ausgleichen kann, kann ein auf fossilen Brennstoffen basierender Erzeuger einen Ausgleich schaffen. Ein solcher Ausgleich durch Erzeuger, die auf fossilen Brennstoffen basieren, soll durch die Speicherstation möglichst gering gehalten werden. Durch die vorgeschlagene Vorgabe wenigstens eines Grenzgradienten kann somit erreicht werden, dass ein solcher Ausgleich durch Erzeuger basierend auf fossilen Brennstoffen gering gehalten wird, gleichwohl abhängig einer Windprognose und/oder einer Leistungsprognose der Ladezustand der Speicherstation angepasst werden kann.

Außerdem oder alternativ kommt auch in Betracht, dass für die Einspeiseleistung ein zeitlicher Verlauf vorgegeben wird. Das kann auch als Fahrplanbetrieb mit Speicherunterstützung bezeichnet werden. Bei einer solchen Vorgabe eines Leistungsverlaufs, nämlich eines Leistungsverlaufs über die Zeit, wird vorgegeben, wie sich die Einspeiseleistung ändern soll. Diese Änderung kann auch von der Windprognose und/oder Leistungsprognose abhängen.

Beispielsweise kann ein solcher Leistungsverlauf vorgegeben werden, um der zu erwartenden Leistungsänderung Rechnung zu tragen. Das kann beispielsweise bedeuten, dass angesichts einer zu erwartenden Windabnahme und daher zu erwartenden Leistungsabnahme, nämlich Abnahme der erzeugten Windleistung, eine entsprechende Reduzierung der Einspeiseleistung vorgegeben wird. Diese kann besonders als vorgeschlagener oder so garantierter Leistungsverlauf an einen Netzbetreiber übermittelt werden. Der Netzbetreiber verlässt sich dann darauf, dass die Änderung der Leistung auch tatsächlich genauso durchgeführt wird, wie an ihn übermittelt wurde. Die wenigstens eine Windenergieanlage zusammen mit der Speicherstation muss dann diesen Leistungsverlauf sicherstellen. Auch dafür kann der wenigstens eine Grenzgradient vorgegeben werden, um dadurch den Ladezustand der Speicherstation so zu beeinflussen, dass sie den vorgegebenen Leistungsverlauf realisieren kann.

Bei der Vorgabe eines Leistungsverlaufs kommt auch in Betracht, dass dieser keine zu starken Änderungen der Leistung, also keine zu starken Änderungen der Einspeiseleistung aufweisen darf. Wird also abhängig der Windprognose und/oder der Leistungsprognose erkannt, dass ein zu starker Abfall oder Anstieg des Windes bzw. der Leistung zu erwarten ist, so kann die Ladestation, nämlich insbesondere der Ladezustand, darauf vorbereitet sein, eine solche zu starke Änderung auszugleichen. Wird also prognostiziert, dass der Wind zu stark abfällt, wäre ein besonders hoher Ladezustand sinnvoll. Ebenso kommt aber auch in Betracht, dass ein zu starker Anstieg des Windes und damit der Leistung vorhergesagt wurde und um das auszugleichen, kann ein geringerer Ladezustand sinnvoll sein. Genau das kann durch das Vorgeben des wenigstens einen Grenzgradienten gesteuert werden. Diese Steuerung des Ladezustandes erfolgt somit indirekt durch lediglich gezielte Begrenzung der Änderung der Einspeiseleistung.

Gemäß einer Ausführungsform wird vorgeschlagen, dass ein Aufladevorgang der Speicherstation und außerdem oder alternativ ein Entladevorgang der Speicherstation als ein Ladezyklus gezählt wird. Dazu wird vorgeschlagen, dass in Abhängigkeit gezählter Ladezyklen die Speicherstation und/oder das Einspeisen der Einspeiseleistung gesteuert wird. Ein Ladezyklus ist somit ein Vorgang, bei dem die Speicherstation einmal vollständig aufgeladen und einmal vollständig entladen wurde. Wird alternativ nur ein Aufladevorgang als Ladezyklus betrachtet oder ein Entladevorgang als Ladezyklus betrachtet, so ergibt sich im Grunde dasselbe Ergebnis, denn die Speicherstation kann nicht mehrfach aufgeladen werden, ohne zwischenzeitlich auch entladen worden zu sein. Wird die Speicherstation bspw. nur zu einem Drittel entladen und wieder aufgeladen, so kann dies entsprechend als ein Drittel Ladezyklus gezählt werden, bzw. dreimal die Speicherstation um 33% aufzuladen und wieder zu entladen kann als ein Ladezyklus angesehen werden. Insbesondere ist vorgesehen, dass hier erst eine sehr hohe Anzahl von Ladezyklen relevant ist. Das ergibt sich auch daraus, dass vorzugsweise eine Lebensdauer der Speicherstation betrachtet wird und eine solche als so lang angenommen werden darf, dass in der Zeit sehr viele Ladezyklen durchgeführt wurden.

Jedenfalls wird vorgeschlagen, dass in Abhängigkeit gezählter Ladezyklen die Speicherstation gesteuert wird bzw. das Einspeisen der Einspeiseleistung gesteuert wird. Die Anzahl der Ladezyklen wird somit bei der Steuerung berücksichtigt. Dem liegt besonders die Erkenntnis zu Grunde, dass die Anzahl der Ladezyklen ein Maß der Belastung der Speicherstation sein kann. Damit kann über die Anzahl der Ladezyklen eine kumulierte Belastung der Speicherstation abgeleitet werden. Somit wird besonders vorgeschlagen, dass die Speicherstation bzw. das Einspeisen der Einspeiseleistung in Abhängigkeit der kumulierten Belastung der Speicherstation gesteuert wird. Mit anderen Worten kann eine mehr oder weniger aggressive Steuerung vorgesehen sein und genau das hängt von der kumulierten Belastung ab und genau das kann damit leicht über die Anzahl der durchgeführten Ladezyklen Berücksichtigung finden.

Besonders wird vorgeschlagen, dass der wenigstens eine Grenzgradient in Abhängigkeit der gezählten Ladezyklen vorgegeben wird. Über die Wahl des Grenzgradienten kann eine entsprechend aggressive oder weniger aggressive Regelung, also eine schnellere oder langsamere Regelung vorgegeben werden. Sind die gezählten Ladezyklen hoch, kommt in Betracht, den jeweiligen Grenzgradienten dem Betrage nach etwas kleiner zu wählen, dem Betrage nach also einen flacheren Anstieg zu wählen.

Außerdem oder alternativ wird vorgeschlagen, dass in Abhängigkeit der Leistungsprognose eine Zyklenprognose erstellt wird. Eine solche vorgeschlagene Zyklenprognose gibt an, wieviel Ladezyklen innerhalb einer vorbestimmten Lebensdauer der Speicherstation zu erwarten sind. Im einfachsten Fall kann die Zahl der Ladezyklen, die in einem Messzeitraum gezählt wurde, proportional zum Verhältnis zwischen der vorbestimmten Lebensdauer und dem Messzeitraum auf die Zyklenprognose für die vorbestimmte Lebensdauer hochgerechnet werden. Betrug also die Messdauer, die auch als Aufnahmedauer bezeichnet werden kann, $\frac{1}{50}$ der Lebensdauer, so kann gemäß einer einfachen Variante die Zyklenprognose den 50fachen Wert der im Messzeitraum gezählten Ladezyklen verwendet werden. Es kommen aber auch komplexere Möglichkeiten in Betracht, bei denen ein Verlauf der Anzahl der Ladezyklen betrachtet wird, von dem aus auf einen weiteren, zu erwartenden Verlauf hochgerechnet, insbesondere extrapoliert werden kann.

Dabei wird vorzugsweise vorgeschlagen, dass in Abhängigkeit der Zyklenprognose die Speicherstation und/oder das Einspeisen der Einspeiseleistung gesteuert wird. Somit kann auch darüber, nämlich über die Zyklenprognose, die Anzahl der Ladezyklen in die Steuerung einfließen.

Besonders vorteilhaft ist, dass besonders über das Vorgeben eines oder mehrerer Grenzgradienten ein Einhalten einer vorbestimmten Lebensdauer der Speicherstation erreicht werden kann. Hierbei kommt auch in Betracht, dass durch Verändern des einen oder der mehreren Grenzgradienten die Häufigkeit der Ladezyklen verändert werden kann. Dadurch verändert sich auch die Anzahl der Ladezyklen und auch die Zyklenprognose. Über die Änderung der Zyklenprognose kann dann auch erkannt werden, ob die Veränderung des einen oder der mehreren Grenzgradienten, oder eine anderweitige Steuerungsanpassung, die zukünftige Anzahl der Ladezyklen in gewünschter Weise verändert hat, oder ob weitere Anpassungen des einen oder der mehreren Grenzgradienten zum Nachjustieren verändert werden sollen.

Gemäß einer Ausführungsform wird vorgeschlagen, dass die Leistungsprognose eine Vorhersage über eine zu erwartende Leistung oder einen zu erwartenden Leistungsverlauf ist, nämlich eine Leistung bzw. ein Leistungsverlauf, die bzw. den die wenigstens eine Windenergieanlage in einem Vorhersagezeitraum in das elektrische Versorgungsnetz einspeisen kann. Die Leistungsprognose ist also eine Vorhersage über einspeisbare Leistung der wenigstens einen Windenergieanlage. Vorzugsweise ist dies nicht nur ein absoluter Wert, sondern ein zeitlicher Verlauf.

Zu der Leistungsprognose wird weiter vorgeschlagen, dass diese außerdem abhängig lokal erfasster Werte ermittelt oder angepasst wird, wobei die lokal erfassten Werte wenigstens einen der folgenden Werte aufweisen.

Ein lokal erfasster Wert kann einer von der wenigstens einen Windenergieanlage abgegebene Anlagenleistung sein. Die Leistungsprognose kann dann dadurch angepasst werden, dass der aktuelle Prognosewert mit dem aktuellen tatsächlichen Leistungswert, also der in dem Moment tatsächlich abgegebenen Anlagenleistung, verglichen wird. Ergeben sich hierbei Unterschiede, kann ein solcher Unterschied ausgehend von den weiteren, nämlich in der Zukunft liegenden Prognosewerten, diese entsprechend anpassen. Hier liegt somit die Annahme zu Grunde, dass die Leistungsprognose zumindest auch den aktuellen Wert des jeweils momentanen Zeitpunktes beinhaltet und von da aus in die Zukunft gerichtet ist. Es kommt aber auch in Betracht, dass die Prognose noch früher, nämlich in der Vergangenheit ansetzt bzw. Werte der Prognose aus der Vergangenheit berücksichtigt werden. Können solche Prognosewerte auch aus der Vergangenheit mitberücksichtigt werden und mit korrespondierenden tatsächlich erzeugten Leistungswerten, also korrespondierenden Werten der abgegebenen Anlagenleistung, verglichen werden, ist eine noch gezieltere Anpassung der Leistungsprognose möglich.

Grundsätzlich, nämlich für jede Ausführungsform, wird vorgeschlagen, Prognosewerte mit Hilfe eines Prädiktionsmodells zu berechnen.

Zwei Möglichkeiten, die Prognosewerte unter Verwendung lokal erfasster Werte zu verbessern, werden vorgeschlagen und nachfolgend basierend auf der abgegebenen Anlagenleistung beschrieben. Statt der abgegebenen Anlagenleistung oder zusätzlich dazu, können auch andere lokal erfasste Werte verwendet werden und sinngemäß wie die Anlagenleistung berücksichtigt werden. Diese Möglichkeiten, die Prognosewerte zu verbessern, können auch als lernende oder adaptive Verfahren bezeichnet werden.

Gemäß der ersten Möglichkeit werden frühere Prognosewerte mit echten gemessenen Werten verglichen, insbesondere hier mit der abgegebenen Anlagenleistung. Es kommt aber auch die Windgeschwindigkeit in Betracht. Abhängig davon kann dann die zukünftige Prognose verbessert werden, indem z.B. wenigstens ein Korrekturfaktor bestimmt und verwendet wird, der auch als Gewichtung bezeichnet werden kann. Der wenigstens eine Korrekturfaktor kann auch variabel sein und insbesondere von der Amplitude der Prognosewerte abhängen.

Gemäß der zweiten Möglichkeit werden mehrere Prädiktionsmodelle verwendet, insbesondere zwei Prädiktionsmodelle, nämlich ein aktuelles Modell, das verwendet und angepasst, also adaptiert werden soll, und ein Referenzmodell, das im Wesentlichen als Referenz zum Anpassen des aktuellen Modells dient. Das aktuelle Modell kann auch synonym als aktuelles Prädiktionsmodell bezeichnet werden, und das Referenzmodell kann auch synonym als Referenzprädiktionsmodell bezeichnet werden. Diese, aber auch andere, Prädiktionsmodelle berechnen für einen Vorhersagezeitraum aus Wettereingangsdaten eine Wettervorhersage, insbesondere eine Windprognose, oder eine Leistungsprognose. Soweit nachfolgend Erläuterungen zu einer Windprognose gegeben werden, sind die analog auch auf eine Leistungsprognose anwendbar. Als Wettereingangsdaten können aktuelle und/oder zurückliegende Satellitenbilder, und/oder aktuelle und/oder zurückliegende Informationen über Luftdruck, Luftfeuchte und Lufttemperatur verwendet werden.

Außerdem oder alternativ können als Wettereingangsdaten eine externe Windprognose, die von extern, insbesondere von einem Wetterdienst, bereitgestellt wird, und lokal erfasste Werte verwendet werden. Werden als Wettereingangsdaten eine externe Windprognose und lokal erfasste Werte verwendet, so kann die externe Windprognose dadurch verbessert werden, insbesondere an den Aufstellungsort angepasst werden.

Es kommt auch in Betracht, dass bei Verwendung einer externen Windprognose und lokal erfasster Werte die Prädiktionsmodelle, zumindest das aktuelle Modell, eine verbesserte Leistungsprognose berechnen.

Die Windprognose ist eine Vorhersage über eine zu erwartende Windgeschwindigkeit oder einen zu erwartenden Windgeschwindigkeitsverlauf und sie ist grundsätzlich ein zeitlicher Verlauf über den Vorhersagezeitraum, der sich z.B. über eine oder mehrere Wochen erstrecken kann. Erläuterungen zur Windprognose sind, sofern nicht anders erläutert, analog auf eine Leistungsprognose übertragbar, die eine Vorhersage über eine zu erwartende Leistung oder einen zu erwartenden Leistungsverlauf ist.

In einer Lernphase wird das aktuelle Modell, wahlweise zusätzlich auch das Referenzmodell, angelernt. Dafür können historische Daten, also Daten aus vergangenen Zeiträumen, verwendet werden. Dafür können für einen vergangenen Vorhersagezeitraum, der bspw. ein Jahr zurückliegen kann, Wettereingangsdaten verwendet werden, die zu Beginn des vergangenen Vorhersagezeitraumes vorlagen. Daraus können mit Hilfe der Prädiktionsmodelle, also dem aktuellen Modell, das angelernt werden soll, und dem Referenzmodell, Windprognosen für den vergangenen Vorhersagezeitraum berechnet, also prognostiziert werden. Außerdem ist für den vergangenen Vorhersagezeitraum auch bekannt, welcher tatsächliche vergangene Verlauf der Windgeschwindigkeit sich damals eingestellt hat.

Es können also die Windprognosen des vergangenen Vorhersagezeitraums mit dem tatsächlichen vergangenen Verlauf der Windgeschwindigkeit verglichen werden. Aus dem Unterschied zwischen der Windprognose des aktuellen Modells für den vergangenen Vorhersagezeitraum und dem tatsächlichen vergangenen Verlauf der Windgeschwindigkeit des vergangenen Vorhersagezeitraums kann dann eine Korrektur oder Adaption des aktuellen Modells vorgenommen werden, die auch als Anpassung bezeichnet werden kann. Eine solche Adaption kann für weitere vergangene Vorhersagezeiträume vorgenommen werden und dadurch kann das aktuelle Modell nach und nach weiter verbessert werden. Die Adaption kann durch einen oder mehrere Korrekturwerte vorgenommen werden. Im einfachsten Fall kann bei der Adaption nur ein Korrekturfaktor oder Verstärkungsfaktor bzw. Gewichtungsfaktor in dem aktuellen Modell angepasst werden.

Außerdem wird in der Lernphase, also für den vergangenen Vorhersagezeitraum, eine Modellabweichung, insbesondere eine Abweichung oder ein Abweichungswert, zwischen der Windprognose des aktuellen Modells und der Windprognose des Referenzmodells aufgenommen. Die Modellabweichung beschreibt eine Abweichung zwischen einer von dem aktuellen Modell bestimmten Windprognose und einer von dem Referenzmodell bestimmten Windprognose. Wenn die Adaption nach und nach für mehrere vergangene Vorhersagezeiträume durchgeführt wird, kann die Modellabweichung bzw. der Abweichungswert verwendet werden, der nach der letzten Adaption vorlag, also der jüngste Abweichungswert.

In einer Anwendungsphase, in der die Prädiktionsmodelle in der Realität angewendet werden, erhalten sie aktuelle Wettereingangsdaten und berechnen daraus jeweils eine Windprognose für einen Vorhersagezeitraum. Aus Abweichungen der Windprognose mit den dann tatsächlich auftretenden Verläufen der Windgeschwindigkeit können weitere Anpassungen der Prädiktionsmodelle, zumindest des aktuellen Prädiktionsmodells, vorgenommen werden.

Zu Beginn der Prognose, also am Anfang des Vorhersagezeitraumes, liegen die tatsächlichen Verläufe der Windgeschwindigkeit aber noch in der Zukunft. Somit können dann noch keine Abweichungen der Windprognose mit den dann tatsächlich auftretenden Verläufen der Windgeschwindigkeit erfasst werden. Es wird daher vorgeschlagen, in der Anwendungsphase ebenfalls eine Modellabweichung, insbesondere einen Abweichungswert, zwischen den Prognosen des aktuellen Modells und des Referenzmodells aufzunehmen und abhängig davon eine Adaption des aktuellen Modells vorzunehmen. Besonders wird vorgeschlagen, die Modellabweichung der Anwendungsphase mit einer früheren Modellabweichung, insbesondere mit einer Modellabweichung der Lernphase zu vergleichen und abhängig davon eine Adaption vorzunehmen. Besonders wird vorgeschlagen, die Adaption dann vorzunehmen, wenn die Modellabweichung der Lernphase dem Betrage nach größer als die Modellabweichung der Anwendungsphase ist und dann wird insbesondere vorgeschlagen, wenigstens einen Korrekturfaktor oder Verstärkungsfaktor des aktuellen Modells so zu verändern, dass sich die Modellabweichung dem Betrage nach verringert.

Das Referenzmodell kann gegenüber dem aktuellen Modell einfacher ausgestaltet sein, und/oder eine geringere Ordnung als das aktuelle Modell aufweisen. Das Referenzmodell kann erster oder sogar nur nullter Ordnung sein, als Windprognose somit eine Gerade oder sogar nur eine Waagerechte als zeitlichen Verlauf der Windprognose ausgeben. Wohingegen das aktuelle Modell zweiter oder höherer Ordnung sein kann, und/oder einen nichtlinearen Zusammenhang aufweisen kann.

Es wurde nämlich erkannt, dass ein solches vereinfachtes Modell dennoch als Orientierung für das komplexere Modell dienen kann. Das aktuelle Modell kann gegenüber dem vereinfachten Referenzmodell eine Windprognose mit genauerem Verlauf erstellen, der besonders Schwankungen besser berücksichtigen kann, als das bei dem vereinfachten Referenzmodell der Fall ist. Es ist daher nicht wünschenswert, dass die Modellabweichung zu null reduziert wird, denn das würde bedeuten, dass das aktuelle Modell keine detailreichere Windprognose erstellen könnte, als das vereinfachte Referenzmodell. Vergrößert sich aber die Modellabweichung in der Anwendungsphase gegenüber der Modellabweichung in der Lernphase, so ist dies dennoch ein Zeichen dafür, dass sich das aktuelle Modell verschlechtert haben kann.

Als anschauliche Erklärung kann gegeben werden, dass eine solche Vergrößerung der Modellabweichung auf eine Divergenz des aktuellen Modells, bzw. seiner Windprognose hindeuten kann. Daher wird vorgeschlagen, das aktuelle Modell dann so anzupassen, dass die Modellabweichung dem Betrage nach verringert wird, insbesondere auf den Wert der letzten Modellabweichung der Lernphase.

Die Modellabweichung kann als Summe der Beträge einzelner Abweichungen zwischen den verglichenen Windprognosen berechnet werden. Die einzelnen Abweichungen können bspw. in vorbestimmten Messabständen aufgenommen werden. Solche Messabstände können im Bereich von einer Minute bis einer Stunde liegen, besonders im Bereich von 5 Minuten bis 15 Minuten.

Die Modellabweichung kann über folgende Verfahren bestimmt bzw. bewertet werden. Es kommt das Verfahren der kleinsten Fehlerquadrate in Betracht, bei dem also die Summe der Quadrate der Abweichungen am kleinsten sind. Eine andere Methode ist, die Summe der absoluten Fehler zu betrachten, also die Summe der Beträge der Abweichungen. Eine weitere Methode ist, eine mittlere Abweichung zu betrachten, bei der besonders ein systematischer Fehler bewertet werden kann, wenn bspw. der Ausgang des einen Modells generell größer ist als der Ausgang des anderen Modells, oder umgekehrt. Vorzugsweise wird vorgeschlagen, einen relativen oder prozentualen Mittelwert einer Modellabweichung zu betrachten. Dabei werden Beträge der Abweichungen der Modellausgänge jeweils in Bezug zu einem dieser Modellausgänge gesetzt, insbesondere in Bezug auf den Ausgang des Referenzmodells, und diese so normierten Abweichungen werden aufsummiert und können noch durch die Anzahl der betrachteten Abweichungen geteilt werden, und/oder als prozentuale Werte angegeben werden.

Dieses Verfahren gemäß dieser zweiten Möglichkeit wird bevorzugt online angewendet, wobei das angewendete Prädiktionsmodell, insbesondere sein wenigstens einer Korrekturfaktor bzw. Verstärkungsfaktor, online verändert wird. Der Korrekturfaktor bzw. Verstärkungsfaktor können auch als Gewichtung oder Gewichtungsfaktor bezeichnet werden.

Ein weiterer lokal erfasster Wert zur Verwendung für die Anpassung der Leistungsprognose ist eine von dem Windpark abgegebene Windparkleistung, wenn also wenigstens eine Windenergieanlage mit weiteren Windenergieanlagen in dem Windpark betrieben wird. Eine Anpassung kann hier auf ganz ähnliche Weise erfolgen, wie zur abgegebenen Anlagenleistung erläutert wurde. Bei der Verwendung der abgegebenen Windparkleistung kann mitunter eine bessere Anpassung erreicht werden, weil mehrere Windenergieanlagen bzw. Abgabeleistungen mehrerer Windenergieanlagen betrachtet werden und damit Leistungsschwankungen einzelner Windenergieanlagen weniger ins Gewicht fallen.

Ein weiterer lokal erfasster Wert, der berücksichtigt werden kann, ist eine von der wenigstens einen Windenergieanlage oder im Bereich der Windenergieanlage oder im Windpark gemessene Windgeschwindigkeit. Auch hier kann zumindest die aktuelle Windgeschwindigkeit mit einem aktuellen Prognosewert verglichen werden, um die Leistungsprognose anzupassen. Hier kommt auch in Betracht, dass aus der aktuellen Windgeschwindigkeit eine zu erwartende Leistung berechnet wird und diese zum Abgleich der Leistungsprognose verwendet wird. Es kommt auch in Betracht, dass eine aktuell erfasste Windgeschwindigkeit mit einer Windprognose verglichen und die Windprognose angepasst wird, um darüber letztlich die Leistungsprognose anzupassen.

Ein weiterer lokal erfasster Wert, der berücksichtigt werden kann, ist eine Drehzahl der wenigstens einen Windenergieanlage. Hier liegt besonders die Erkenntnis zu Grunde, dass eine Windenergieanlage, jedenfalls sofern sie drehzahlvariabel ist, eine windgeschwindigkeitsabhängige Drehzahl aufgrund ihrer Betriebsführung aufweist. Aus der Drehzahl der Windenergieanlage kann somit der Betriebszustand der Windenergieanlage abgelesen werden. Darüber kann dann eine Anpassung der Leistungsprognose erfolgen, denn auch hier können Abweichungen zwischen einem aktuellen Prognosewert und Leistungswerten vorgenommen werden, die sich aus dem aktuellen Betriebspunkt ermitteln lassen.

Ein weiterer lokal erfasster Wert, der berücksichtigt werden kann, ist ein Blattwinkel wenigstens eines Rotorblattes der wenigstens einen Windenergieanlage. Besonders im Volllastbetrieb, wenn die Windgeschwindigkeit oberhalb einer Nennwindgeschwindigkeit liegt, wird eine Windenergieanlage mittels Blattverstellung auf einen Leistungswert, insbesondere Nennleistung, eingeregelt. Gleichzeitig wird sie dabei meist auf einen maximalen Drehzahlwert, insbesondere Nenndrehzahl, ebenfalls eingeregelt. Damit lässt der Blattwinkel Rückschlüsse auf den aktuellen Betriebspunkt zu. Entsprechend kann abhängig dieses Betriebspunktes die Leistungsprognose angepasst werden. Alternativ kann eine Windprognose angepasst werden.

Hierbei ist zu beachten, dass im Volllastbetrieb, besonders wenn die Windgeschwindigkeit weit über Nennwindgeschwindigkeit liegt, die erzeugbare Leistung und ihre Prognose zwar kaum voneinander abweichen dürften, nämlich in beiden Fällen Nennleistung betragen dürften, gleichwohl potentielle Leistungen, also Leistungen, die theoretisch bei Überschreiten der durch die Nennleistung gesetzten Grenze erzeugbar wären, sich zwischen aktuellem Wert und Prognosewert unterscheiden können. Dies kann durch die Berücksichtigung des Blattwinkels, der Aufschluss über die potentiell erzeugbare Leistung gibt, berücksichtigt werden.

Als weiterer lokal erfasster Wert kommt eine Anlagenverfügbarkeit der wenigstens einen Windenergieanlage in Betracht. Auch dies kann für mehrere Windenergieanlagen, die in einem gemeinsamen Windpark betrieben werden, angewendet werden. Aus einer solchen Anlagenverfügbarkeit kann die Leistungsprognose angepasst werden. Eine Möglichkeit ist, dass aufgrund vorbekannter Termine, wie beispielsweise einem Wartungsintervall, Ausfälle einer oder mehrerer Windenergieanlagen bereits vorher bekannt sind und daraus eine angepasste Leistungsprognose abgeleitet werden kann. Beispielsweise kann für einen Zeitraum, in dem bekannt ist, dass eine von 10 Windenergieanlagen in einem Windpark aufgrund von Wartung ausfällt, die Leistungsprognose, die diesen Ausfall zunächst nicht berücksichtigt, auf einen Wert von 90% des Wertes reduziert werden, den die Leistungsprognose ohne Kenntnis dieses Ausfalls ermittelt hat.

Vorzugsweise wird vorgeschlagen, dass zu einem, mehreren oder allen der lokal erfassten Werte jeweils ein zeitlicher Werteverlauf und/oder eine Wertefolge aufgenommen und/oder berücksichtigt werden. Es werden also nicht nur einzelne Werte erfasst, sondern deren Verläufe. Entsprechend wird auch vorgeschlagen, die entsprechenden Verläufe mit entsprechenden Verläufen der anzupassenden Windprognose zu vergleichen.

Gemäß einer Ausführungsform wird vorgeschlagen, dass die Windprognose und/oder die Leistungsprognose abhängig einer von extern, insbesondere von einem Wetterdienst, erhaltenen Wettervorhersage ermittelt wird, und abhängig einer lokalen Anpassungsvorschrift adaptiert wird. Somit bildet eine Wettervorhersage eines externen Anbieters, die somit nicht auf den Bereich eines Windparks örtlich beschränkt ist, die Ausgangsbasis für die Windprognose oder Leistungsprognose. Eine Leistungsprognose wird von externen Wetterdiensten selten angeboten, zumal dafür eine Kenntnis der Windenergieanlage nötig wäre, aber aus einer Wetterprognose, die eine Windprognose beinhaltet, kann für eine Windenergieanlage bzw. einen Windpark bei entsprechender Kenntnis der Windenergieanlage bzw. des Windparks eine zugehörige Leistung und damit Leistungsprognose berechnet werden.

Besonders durch Voruntersuchungen, die bei Vermessung des Aufstellungsortes der Windenergieanlage bzw. des Windparks durchgeführt wurden, aber auch basierend auf aktuellen Messwerten einer betriebenen Windenergieanlage bzw. eines betriebenen Windparks, können Unterschiede zwischen Wettervorhersage bzw. daraus abgeleiteten Leistungsvorhersagen aufgenommen werden. Daraus kann eine Anpassvorschrift abgeleitet werden. Eine solche Anpassvorschrift kann auch über eine Simulation ermittelt werden.

Um ein anschauliches, stark vereinfachtes Beispiel zu nennen, könnte eine Anpassvorschrift so aussehen, dass erkannt wurde, dass die erzeugbare Leistung in einer Windenergieanlage bzw. einem Windpark beispielsweise immer um 10% über dem Wert liegt, der sich aus einer regionalen Wettervorhersage für diese Windenergieanlage bzw. diesen Windpark ergibt. Die Anpassvorschrift kann dann diese beispielhaften 10% wieder herausrechnen. Es kommt aber auch in Betracht, dass kein allgemeingültiger Wert vorliegt, sondern, dass die Anpassvorschrift von weiteren Informationen abhängt, wie beispielsweise einer Windrichtung und auch einer Windstärke.

Vorzugsweise wird vorgeschlagen, dass die Anpassvorschrift besonders unter Berücksichtigung wenigstens eines lokal erfassten Wertes adaptiert wird. Dazu kommt besonders ein lokal erfasster Wert oder mehrere lokal erfasste Werte gemäß aller vorstehend genannter lokal erfasster Werte in Betracht.

Gemäß einer Ausführungsform wird vorgeschlagen, dass ein Einspeisefahrplan erstellt und zur externen Verwendung ausgegeben wird. Insbesondere wird vorgeschlagen, dass dieser zur Verwendung von einem Netzbetreiber an den Netzbetreiber ausgegeben wird. Der Netzbetreiber kann dann basierend auf diesem Einspeisefahrplan besser planen.

Dabei ist ein Einspeisefahrplan ein Plan, der eine Einspeisung oder mögliche Einspeisung elektrischer Leistung in das elektrische Versorgungsnetz über einen Planzeitraum vorgibt. Dazu wird vorgeschlagen, dass der Einspeisefahrplan abhängig der Windprognose und/oder abhängig der Leistungsprognose, und außerdem abhängig lokal erfasster Werte und abhängig des Ladezustands der Speicherstation erstellt wird. Die lokal erfassten Werte können besonders solche sein, wie vorstehend bereits zur Anpassung der Leistungsprognose oder Windprognose erläutert wurde. Vorzugsweise wird der Einspeisefahrplan abhängig des wenigstens einen Grenzgradienten erstellt.

Somit kann über diesen Einspeisefahrplan dem Netzbetreiber eine Information darüber zur Verfügung gestellt werden, welche Einspeiseleistung er von der Speicherstation zusammen mit der wenigstens einen Windenergieanlage erwarten darf. Aus Sicht des Netzbetreibers kann die Speicherstation zusammen mit der wenigstens einen Windenergieanlage, insbesondere zusammen mit einem Windpark, als ein gemeinsamer Erzeuger bzw. Einspeiser angesehen werden. Die Windenergieanlagen eines solchen Windparks bilden dabei die tatsächlichen Erzeuger, die ohne Speicherstation entweder großen Schwankungen unterliegen würden oder zur Vermeidung von Schwankungen überwiegend in einem abgeregelten Betrieb betrieben werden müssen. Ein solches System kann auch als Windenergiesystem bezeichnet werden, das eine oder mehrere Windenergieanlagen oder einen Windpark und eine Speicherstation aufweist.

Besonders wird vorgeschlagen, dass der Einspeisefahrplan abhängig des wenigstens einen Grenzgradienten erstellt wird. Durch den wenigstens einen Grenzgradienten wird festgelegt, wie stark sich die Einspeiseleistung ändern darf. Der Einspeisefahrplan kann eine solche Vorgabe der beschränkten Änderung der Einspeiseleistung noch verbessern, indem er nicht nur den einen oder die mehreren Grenzgradienten einhält, sondern darüber hinaus noch genauer angibt, mit welchen Änderungen zu rechnen ist. Gleichzeitig müssen diese Änderungen innerhalb des Bereichs liegen, der durch den wenigstens einen Grenzgradienten vorgegeben wird. Stellt sich heraus, dass ein Grenzgradient nicht oder nur mit großem Aufwand eingehalten werden kann, so kommt auch in Betracht, diesen Grenzgradienten entsprechend anzupassen, und die entsprechend vorgenommene Anpassung als Information nach extern bereitzustellen, insbesondere an einen Netzbetreiber zu übermitteln.

Gemäß einer Ausführungsform wird vorgeschlagen, dass für die Windprognose und/oder für die Leistungsprognose eine Prognosegüte bestimmt wird, die eine Abschätzung einer zu erwartenden Abweichung des auftretenden Windes von der Windprognose bzw. der erzeugten Leistung von der Leistungsprognose angibt. Dazu wird weiter vorgeschlagen, dass die zeitlichen Änderungen der Einspeiseleistung, insbesondere der wenigstens eine Grenzgradient, abhängig der Prognosegüte vorgegeben wird.

Hier liegt besonders der Gedanke zu Grunde, dass über den wenigstens einen Grenzgradienten vorgegeben wird, in welchem Rahmen sich die Einspeiseleistung ändern darf oder soll. Besonders der Netzbetreiber ist an solchen Merkmalen interessiert. Abhängig solcher Informationen, insbesondere abhängig maximaler Änderungsgeschwindigkeiten kann er ggf. weitere Einspeiseeinheiten steuern, insbesondere zum Einspeisen hinzuziehen. Insoweit sollte sich der Netzbetreiber auf die Grenzgradienten der Einspeiseleistung verlassen können. Es ist also wichtig, dass die maximale Änderung der Einspeiseleistung, die durch den wenigstens einen Grenzgradienten vorgegeben ist, auch möglichst eingehalten wird.

Hier liegt besonders die Erkenntnis zu Grunde, dass bei einer geringen Prognosegüte, wenn also große Abweichungen der Prognose, nämlich der Windprognose und/oder der Leistungsprognose zu erwarten sind, der wenigstens eine Grenzgradient dem Betrage nach eher größer vorgegeben wird, wohingegen bei einer hohen Prognosegüte der wenigstens eine Grenzgradient dem Betrage nach eher klein vorgegeben werden kann, weil nur mit wenigen oder geringen Abweichungen von der Prognose zu rechnen ist.

Allerdings ist grundsätzlich eher ein dem Betrage nach geringer Grenzgradient wünschenswert, denn das bedeutet, dass nur eine geringe zeitliche Änderung erwartet wird. Dadurch kann der Netzbetreiber eine höhere Planungssicherheit bekommen.

Mitunter kommt auch in Betracht, dass zu starke Leistungsänderungen, also ein dem Betrage nach zu großer Grenzgradient besonders seitens des Netzbetreibers sanktioniert wird. Es können Vertragsstrafen entstehen oder im äußersten Fall kann sogar die Betriebserlaubnis entzogen werden. Daher ist es grundsätzlich wünschenswert, den Grenzgradienten jeweils dem Betrage nach so klein wie möglich anzugeben, sofern ein solcher dann auch eingehalten werden kann. Entsprechend würde ein dem Betrage nach großer Grenzgradient möglichst selten vorgegeben und insbesondere möglichst nur dann, wenn eine sehr schlechte Prognosegüte das erforderlich macht.

Außerdem oder alternativ wird vorgeschlagen, dass der Einspeisefahrplan in Abhängigkeit der Prognosegüte erstellt wird. Auch hier liegt der Gedanke zu Grunde, dass der Einspeisefahrplan eine umso bessere Orientierung und Planbarkeit für den Netzbetreiber erreichen kann, wenn auch berücksichtigt wird, in welcher Größe Abweichungen zu erwarten sind. Vorzugsweise wird eine solche Prognosegüte auch an den Netzbetreiber als Zusatzinformation mit übertragen, wodurch der Netzbetreiber seine Planung verbessern kann gegenüber einer Variante, bei der er die Prognosegüte nicht erhält.

Gemäß einer Ausführungsform wird vorgeschlagen, dass für die Speicherstation ein Zielladezustand vorgegeben wird. Ein solcher Zielladezustand kann beispielsweise 50% seines maximal möglichen Ladezustands betragen, oder 70%, oder auch 30%. Insbesondere wird ein solcher Zielladezustand nicht immer gleich vorgegeben. Es wird nämlich vorgeschlagen, dass der Zielladezustand abhängig der Windprognose und/oder abhängig der Leistungsprognose vorgegeben wird.

Hier liegt besonders die Erkenntnis zu Grunde, dass eine erwartete zunehmende Windgeschwindigkeit und/oder eine zu erwartende zunehmende von der wenigstens einen Windenergieanlage erzeugte Leistung zur Einhaltung von Grenzgradienten eine Abspeicherung von Leistung bzw. Energie in der Speicherstation erforderlich machen kann. Entsprechend würde in diesem Fall der Zielladezustand eher einen geringen Wert wie 30% oder sogar 20% annehmen. Wird eine abfallende Windgeschwindigkeit bzw. eine abfallende Leistungsproduktion durch die wenigstens eine Windenergieanlage erwartet, so wäre ein höherer Zielladezustand sinnvoll, um einen zu starken Leistungsabfall der Einspeiseleistung durch Stützung mit Leistung aus der Speicherstation aufzufangen.

Erfindungsgemäß wird auch ein Windenergiesystem vorgeschlagen. Ein solches Windenergiesystem ist zum Einspeisen elektrischer Leistung in ein elektrisches Versorgungsnetz vorgesehen, wobei das elektrische Versorgungsnetz mehrere elektrische Verbraucher aufweist. Das Windenergiesystem umfasst wenigstens eine Windenergieanlage, um elektrische Leistung aus Wind zu erzeugen. Es können auch mehrere Windenergieanlagen vorgesehen sein und es kommt auch in Betracht, dass das Windenergiesystem mehrere Windenergieanlagen als Windpark umfasst.

Außerdem ist wenigstens eine elektrische Speicherstation vorgesehen zum Aufnehmen und Abgeben elektrischer Speicherleistung.

Die wenigstens eine Windenergieanlage weist eine Abgabeeinheit auf, zum Abgeben aus Wind erzeugter elektrischer Leistung als erzeugte Windleistung. Die Abgabeeinheit ist dabei vorzugsweise dazu vorbereitet, in das elektrische Versorgungsnetz einzuspeisen, beispielsweise über einen Netzanschlusspunkt. Dabei kann beispielsweise auch ein Transformator vorgesehen sein, der zwischen der Windenergieanlage und dem Netzanschlusspunkt vorgesehen ist. Jedenfalls kann die Abgabeeinheit dabei als Wechselrichter ausgebildet sein, der die abgegebene erzeugte elektrische Leistung über einen entsprechenden von dem Wechselrichter erzeugten Wechselstrom mit einer entsprechenden Wechselspannung ausgibt.

Es kommt aber auch in Betracht, dass die Windenergieanlage die erzeugte Windleistung nicht vollständig in das elektrische Versorgungsnetz einspeist, weil ein Teil der erzeugten Windleistung, oder sogar 100% davon, an die Speicherstation übergeben wird.

Weiterhin weist das Windenergiesystem eine Einspeiseanordnung auf, zum Einspeisen einer Einspeiseleistung in das elektrische Versorgungsnetz. Eine solche Einspeiseanordnung kann einen Wechselrichter, insbesondere einen bidirektional arbeitenden Wechselrichter der Speicherstation umfassen und sie kann die Abgabeeinheit der Windenergieanlage als weiteren Teil der Einspeiseanordnung umfassen. Die Einspeisung kann dann an einem bzw. den bereits genannten Netzanschlusspunkt vorgenommen werden. Ein Netztransformator und/oder ein Netztrennschalter kann ebenfalls einen Teil der Einspeiseanordnung bilden.

Insbesondere führt das Windenergiesystem somit das Einspeisen elektrischer Leistung in das elektrische Versorgungsnetz gemeinschaftlich durch, nämlich derart, dass die Windenergieanlage und die Speicherstation sich am Einspeisen beteiligen. Sie speisen dann zusammen die elektrische Einspeiseleistung ein. Diese ergibt sich somit aus der erzeugten Windleistung und einer von der Speicherstation aufgenommenen oder abgegebenen Speicherleistung. Wenn die Speicherstation Speicherleistung abgibt, setzt sich somit die Einspeiseleistung aus der erzeugten Windleistung und der abgegebenen Speicherleistung zusammen. Nimmt die Speicherstation aber Speicherleistung auf, so ist diese von der erzeugten Windleistung abzuziehen und der verbleibende Rest bildet dann die Einspeiseleistung.

Weiterhin ist für das Windenergiesystem eine Steuereinrichtung vorgesehen, um das Einspeisen der Einspeiseleistung in das elektrische Versorgungsnetz zu steuern, nämlich in Abhängigkeit eines Ladezustandes der Speicherstation und in Abhängigkeit einer Windprognose und/oder einer Leistungsprognose.

Weiterhin ist die Steuereinrichtung dazu vorgesehen, dass das Einspeisen so gesteuert wird, dass zeitliche Änderungen der Einspeiseleistung in Abhängigkeit der Windprognose und/oder der Leistungsprognose gesteuert werden und für Änderungen der Einspeiseleistung wenigstens ein Grenzgradient vorgegeben wird, um die Änderungen der Einspeiseleistung darauf zu begrenzen, und wobei der wenigstens eine Grenzgradient in Abhängigkeit der Windprognose und/oder der Leistungsprognose vorgegeben wird.

Die Steuereinrichtung koordiniert somit das Einspeisen der Einspeiseleistung in der genannten Art und Weise. Örtlich kann die Steuereinrichtung dabei in einer separaten Station, oder in einer der Windenergieanlagen, oder in der Speicherstation angeordnet sein. Vorzugsweise weist eine solche Steuereinrichtung eine Kommunikationsverbindung zu der wenigstens einen Windenergieanlage, der Speicherstation und einer externen Leitstelle des elektrischen Versorgungsnetzes auf, insbesondere einer Leitstelle des Netzbetreibers des elektrischen Versorgungsnetzes. Dadurch kann besonders die Speicherstation abhängig der Windenergieanlage und abhängig von Vorgaben der Leitstelle betrieben werden. Außerdem kann die Steuereinrichtung der Leitstelle und damit insbesondere dem Netzbetreiber Informationen zu ihrer Leistungseinspeisung zur Verfügung stellen, damit der Netzbetreiber entsprechend planen kann.

Vorzugsweise ist das Windenergiesystem, insbesondere die Steuereinrichtung, dazu vorbereitet, zumindest ein Verfahren gemäß wenigstens einer vorstehend beschriebenen Ausführungsform auszuführen. Dafür können entsprechende Verfahrensschritte in der Steuereinrichtung implementiert sein.

Vorzugsweise ist vorgesehen, dass das Windenergiesystem, insbesondere seine Steuereinrichtung, eine Kommunikationsschnittstelle aufweist, zum Empfangen und automatisierten Auswerten wenigstens einer Wettervorhersage. Wettervorhersagen werden von vielen Anbietern heutzutage bereitgestellt und sind häufig auch für unterschiedliche Regionen erhältlich. Grundsätzlich können Computer und andere Steuereinrichtungen, sofern sie eine Internetverbindung aufweisen, solche Wettervorhersagen empfangen. Hier wird aber vorgeschlagen, dass die Kommunikationsschnittstelle zum Empfangen und automatisierten Auswerten der wenigstens einen Wettervorhersage vorgesehen ist.

Besonders können hier gezielte Anpassungen in der Kommunikationsschnittstelle vorgesehen sein, die aus einer Wettervorhersage benötigte Daten zur Weiterverarbeitung extrahiert. Besonders sind hier Daten zu Windgeschwindigkeiten und Windrichtungen zu extrahieren. Diese können dann in der Steuereinrichtung weiterverarbeitet werden. Besonders können abhängig davon Prognosen erstellt und abhängig weiterer Werte verbessert werden.

Die Erfindung wird nun nachfolgend exemplarisch anhand von Ausführungsformen unter Bezugnahme auf die begleitenden Figuren näher erläutert.

Figur 1    zeigt eine Windenergieanlage in einer perspektivischen Darstellung.

Figur 2    zeigt ein Windenergiesystem mit einem Windpark und einer Speicherstation in einer schematischen Darstellung.

Figur 3    zeigt eine Regelungsstruktur zum Steuern und damit Betreiben einer elektrischen Speicherstation.

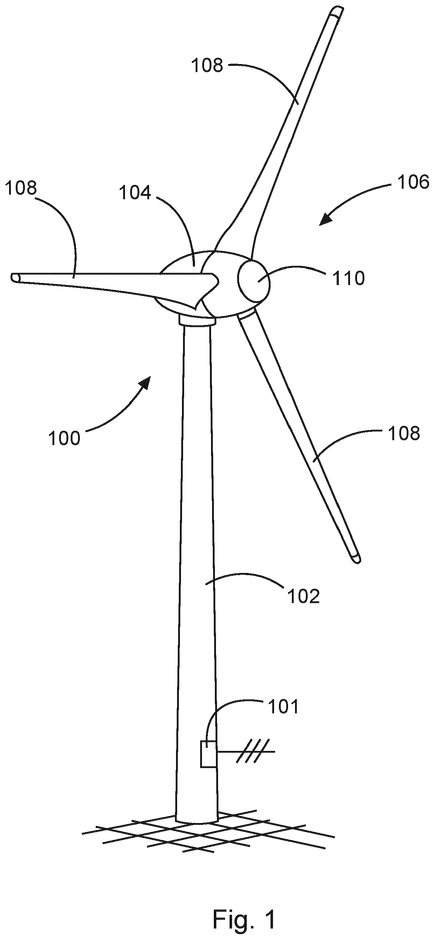

Figur 1 zeigt eine Windenergieanlage 100 mit einer Abgabeeinheit 101, die als Wechselrichter ausgebildet sein kann, einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

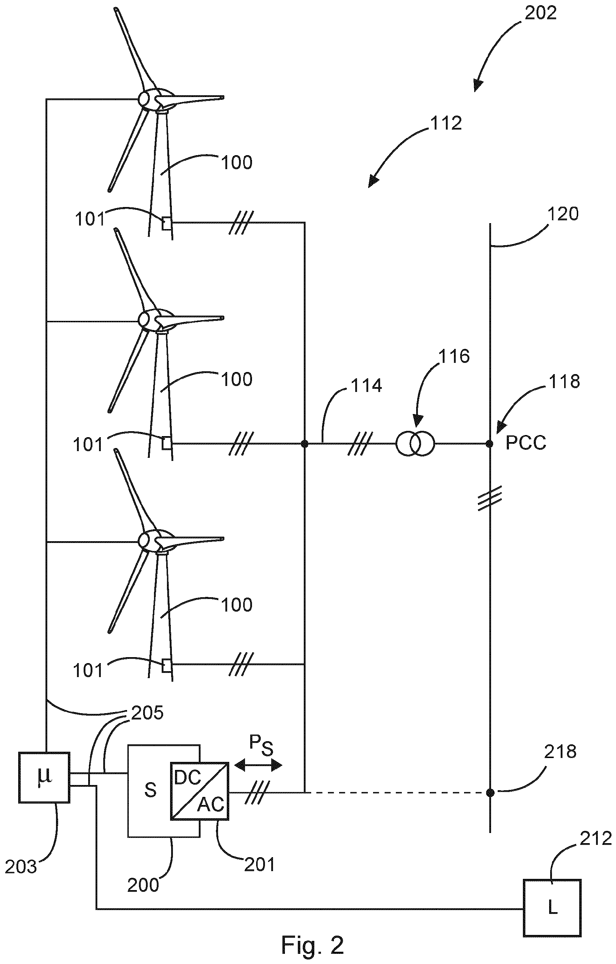

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der auch als Netztransformator oder Netztrafo bezeichnet werden kann und die Spannung im Park hochtransformiert, um dann an dem gemeinsamen Netzanschlusspunkt 118, der auch synonym als PCC oder Einspeisepunkt bezeichnet wird, in das Versorgungsnetz 120 einzuspeisen.

Fig. 2 ist nur eine vereinfachte Darstellung eines Windparks 112, die beispielsweise keine Steuerung des Windparks zeigt, obwohl natürlich eine solche Steuerung vorhanden ist.

Auch kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

Figur 2 zeigt zusätzlich zu dem Windpark 112 auch eine Speicherstation 200. Die Speicherstation 200 kann mit an das Parknetz 114 angeschlossen sein und dann darüber und über den Transformator 116 und den gemeinsamen Netzanschlusspunkt 118 in das elektrische Versorgungsnetz 120 einspeisen. Alternativ kommt auch in Betracht, dass die Speicherstation 200 über einen eigenen Netzanschlusspunkt 218 in das elektrische Versorgungsnetz 120 einspeist. Dazu weist die Speicherstation einen bidirektional arbeitenden Wechselrichter 201 auf. Es kann auch ein Transformator wie der Transformator 116 zum Einspeisen über den eigenen Netzanschlusspunkt 218 in das elektrische Versorgungsnetz 120 vorgesehen sein.

Das Einspeisen elektrischer Leistung durch die Speicherstation 200 beinhaltet auch ein negatives Einspeisen, also die Entnahme von Leistung aus dem elektrischen Versorgungsnetz und damit das Einspeichern dieser elektrischen Leistung in der Speicherstation 200. Für die Speicherstation 200 wird dabei vorzugsweise eine abgegebene Speicherleistung, die also in das elektrische Versorgungsnetz eingespeist wird, als positive Leistung betrachtet. Da somit Speicherleistung $P_S$ aufgenommen oder abgegeben werden kann, ist dies in Figur 2 mit einem entsprechenden Doppelpfeil gekennzeichnet.

Der Windpark 112 bildet somit zusammen mit der Speicherstation 200 ein Windenergiesystem 202. Dafür ist eine gemeinsame Steuereinrichtung 203 vorgesehen, die mit der Speicherstation 200, den Windenergieanlagen 100 und einer Leitstelle 212 über eine Kommunikationsverbindung 205 gekoppelt ist. Die Steuereinrichtung 203 kann auch statt mit den Windenergieanlagen 100, oder zusätzlich dazu, mit einer Parksteuerung gekoppelt sein, die hier nicht gezeigt ist.

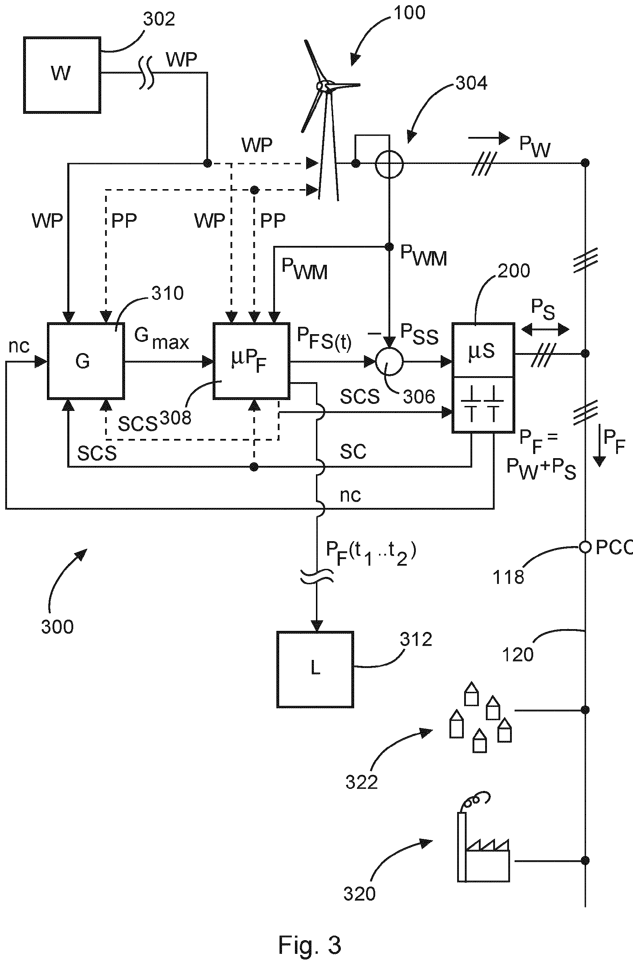

Figur 3 zeigt eine Regelungsstruktur 300, die im Wesentlichen dazu dient, die Speicherstation 200 zu steuern und dadurch zu betreiben. Obwohl die Speicherstation 200 etwas anders als in Figur 2 dargestellt ist, kann sie dieser entsprechen. Die detailliertere Darstellung der Speicherstation 200 in Figur 3 dient lediglich zur besseren Erläuterung der Regelungszusammenhänge. In Figur 3 sind an dem elektrischen Versorgungsnetz zur Veranschaulichung zudem als zwei mögliche Verbraucher ein industrieller Verbraucher 320 und eine Ortschaft 322 schematisch und repräsentativ für weitere Verbraucher eingezeichnet.

Ansonsten ist in der Regelungsstruktur 300 noch eine Windenergieanlage 100 angedeutet, die somit der Windenergieanlage 100 in Figur 1 bzw. jeweils einer Windenergieanlage 100 der Figur 2 entsprechen kann. Ansonsten steht die Windenergieanlage 100 in Figur 3 aber auch repräsentativ für mehrere Windenergieanlagen oder auch einen Windpark 112 gemäß Figur 2. Sowohl die Windenergieanlage 100 als auch die Speicherstation 200 speien Leistung in das elektrische Versorgungsnetz 120 ein, und das kann über den gemeinsamen Netzanschlusspunkt 118 erfolgen. Ein etwaiger Netztransformator wie der Netztransformator 116 der Figur 2 kann ebenfalls vorgesehen sein, er ist hier der Einfachheit halber aber nicht dargestellt.

Außerdem verwendet die Regelungsstruktur 300 eine Wetterstation 302, die in der Figur 3 eingezeichnet ist, aber nur Informationen liefert, nämlich besonders eine Windprognose WP. Die Wetterstation 302 kann dabei örtlich woanders angeordnet sein und die Informationsübertragung, nämlich besonders die Übertragung der Windprognose WP, kann auch kabellos erfolgen. Die Wetterstation 302 ist nicht Teil des Windenergiesystems 300. Lediglich eine Kommunikationsschnittstelle zur Wetterstation 302 kann Teil des Windenergiesystems 300 sein.

Im Betrieb speist die Windenergieanlage 100 eine Windleistung $P_W$ ein. Außerdem speist die Speicherstation 200 eine Speicherleistung $P_S$ ein, die auch negativ sein kann, wenn die Speicherstation nämlich diese Speicherleistung $P_S$ aufnimmt. Beide zusammen ergeben die Einspeiseleistung $P_F$, die sich somit als Summe der Windleistung $P_W$ und der Speicherleistung $P_S$ ergibt:

$$P_F = P_W + P_S$$

Idealerweise speist die Windenergieanlage 100 so viel Windleistung $P_W$ ein, wie aufgrund des vorherrschenden Windes möglich ist. Die Speicherstation 200 stellt sich dann darauf ein und speist entsprechend Speicherleistung ein, gibt also Speicherleistung ab oder nimmt Speicherleistung auf, um dadurch die Einspeiseleistung $P_F$ zu verstetigen.

Es wird darauf hingewiesen, dass die Windleistung $P_W$, die Speicherleistung $P_S$ und die Einspeiseleistung $P_F$ in der Regelstruktur 300 tatsächlich Leistungen bezeichnen, soweit sie mit einem separaten Pfeil an Leitungen angezeichnet sind, die zudem als dreiphasige Leitungen in der Regelungsstruktur 300 gekennzeichnet sind. Die übrigen Verbindungslinien der Regelungsstruktur 300 zeigen nur Signalleitungen oder Datenleitungen an, auf denen besonders Messwerte, Sollwerte oder andere Informationen übertragen werden.

Somit erhält die Speicherstation 200 einen Speicherleistungssollwert $P_{SS}$, der der Speicherstation 200 die Information gibt, in welcher Höhe Speicherleistung $P_S$ abgegeben oder aufgenommen werden soll.

Der Speicherleistungssollwert $P_{SS}$ hängt dabei von einem Einspeiseleistungssollwert $P_{FS}$ und der Windleistung $P_W$ ab. Die Windleistung $P_W$ wird dafür beispielsweise in der Leistungsmesseinheit 304 erfasst und als Windleistungsmesswert $P_{WM}$ an das Summierglied 306 gegeben und dort von dem Einspeiseleistungssollwert $P_{FS}$ abgezogen.

Der Einspeiseleistungssollwert $P_{FS}$ wird von dem Einspeiseplanblock 308 ermittelt und ausgegeben. Gemäß der Regelungsstruktur 300 ist dabei als Ausgabegröße des Einspeiseplanbocks 308 der Einspeiseleistungssollwert $P_{FS}(t)$ angegeben. Damit soll verdeutlicht werden, dass dieser Einspeiseleistungssollwert $P_{FS}(t)$ eine zeitveränderliche Größe sein kann und insbesondere auch als zeitlicher Verlauf ausgegeben werden kann. Gleiches kann dann natürlich auch für die übrigen Größen gelten, besonders für den sich daraus berechnenden Speicherleistungssollwert $P_{SS}$. Der besseren Übersichtlichkeit halber ist bei den übrigen Größen die mögliche Zeitabhängigkeit nicht kenntlich gemacht, obwohl sie vorhanden sein kann.

Der Einspeiseplanblock 308 ermittelt den Einspeiseleistungssollwert $P_{FS}$ abhängig des Windleistungsmesswertes $P_{WM}$, abhängig wenigstens eines Grenzgradienten $G_{max}$, abhängig eines Ladezustandes SC der Speicherstation 200 und abhängig einer Leistungsprognose PP oder statt der Leistungsprognose PP oder zusätzlich dazu abhängig einer Windprognose WP. Der Ladezustand SC als auch die Windprognose WP bzw. die Leistungsprognose PP können dabei indirekt über den Grenzgradienten $G_{max}$ einfließen.

Der Grenzgradient $G_{max}$ wird in dem Gradientenblock 310 ermittelt. Der Grenzgradient $G_{max}$ ist repräsentativ auch für mehrere Grenzgradienten eingezeichnet. Besonders kann ein oberer Grenzgradient, der also einen Leistungsanstieg begrenzt, und ein unterer Grenzgradient, der einen Leistungsabfall begrenzt, vorgesehen sein.

Der wenigstens eine Grenzgradient $G_{max}$ wird dabei abhängig des Ladezustandes SC und der Windprognose WP und/oder der Leistungsprognose PP bestimmt. Dabei wird der Ladezustand SC besonders derart berücksichtigt, dass bei einem geringen Ladezustand SC der wenigstens eine Grenzgradient $G_{max}$ besonders so eingestellt wird, dass eine Erhöhung der Einspeiseleistung $P_F$ stärker als eine Verringerung der Einspeiseleistung $P_F$ begrenzt wird. Das kann grundsätzlich dazu führen, dass sich der Ladezustand SC erhöht. Entsprechend kann eine Verringerung der Einspeiseleistung $P_F$ stärker begrenzt werden als eine Erhöhung, wenn der Ladezustand SC hoch ist und abgesenkt werden soll.

Andererseits kann die Windprognose WP berücksichtigt werden, um Änderungen der Windleistung $P_W$ antizipieren zu können. Dazu kann auch unmittelbar eine Leistungsprognose PP von der Windenergieanlage 100 verwendet werden. Die Windenergieanlage 100 kann dazu selbst eine Windprognose als Eingangsgröße erhalten. Die Windenergieanlage 100 kann evtl. aus der Windprognose WP aufgrund ihrer eigenen Verhaltensweisen möglicherweise am besten eine Leistungsprognose PP ableiten und dem Gradientenblock 310 zur Verfügung stellen. Jedenfalls kann aufgrund einer Windprognose, also besonders einer Wettervorhersage, eine Änderung vorhergesehen oder zumindest erwartet werden und davon abhängig kann beurteilt werden, in welchem Bereich Grenzgradienten überhaupt eingehalten werden können.

Es ist zu beachten, dass die Grenzgradienten sich auf die Einspeiseleistung $P_F$ beziehen. Besonders durch einen solchen oder mehrere Grenzgradienten $G_{max}$ kann auch die Einspeiseleistung $P_F$ geplant werden und eine solche Planung kann an einen Netzbetreiber übergeben werden. Daher wird vorgeschlagen, dass abhängig einer Windprognose WP und/oder einer Leistungsprognose PP berücksichtigt wird, welche Bereiche für die Grenzgradienten oder zumindest den einen Grenzgradient $G_{max}$ in Betracht kommen.

Der wenigstens eine Grenzgradient $G_{max}$ wird auf diese Weise in dem Gradientenblock 310 ermittelt und an den Einspeiseplanblock 308 übergeben. Beispielsweise kann hierbei ein positiver Grenzgradient im Sinne einer zeitlich ansteigenden Flanke und ein negativer Grenzgradient im Sinne einer zeitlich abfallenden Flanke ermittelt und an den Einspeiseplanblock 308 übergeben werden. Davon abhängig kann dann unter Berücksichtigung des Windleistungsmesswertes $P_{WM}$, also unter Berücksichtigung der aktuell eingespeisten Windleistung $P_W$ der Einspeiseleistungssollwert $P_{FS}$ ermittelt werden.

Im Idealfall, der auch zunächst der Erläuterung dient, liegen stabile Windverhältnisse vor und die Windenergieanlage 100 speist eine im Wesentlichen konstante Windleistung $P_W$ ein. Die Windleistung ändert sich kaum und diese kann dann unmittelbar den Einspeiseleistungssollwert $P_{FS}$ bilden. Von diesem Sollwert wird an dem Summierglied 306 der Windmesswert $P_{WM}$ abgezogen und das Ergebnis sollte dann null sein. Der Speicherleistungssollwert $P_{SS}$ wäre dann also null und die Speicherstation bräuchte dann weder Speicherleistung $P_S$ abzugeben oder aufzunehmen.

Schwankt nun aber der Wind so stark, dass die Windleistung $P_W$ und damit auch der Windleistungsmesswert $P_{WM}$ die Grenzen gemäß dem Grenzgradienten $G_{max}$ bzw. der zwei Grenzgradienten dem Betrage nach überschreitet, so ist eine Möglichkeit, dass der Windleistungsmesswert $P_{WM}$ als Einspeiseleistungssollwert $P_{FS}$ verwendet wird, solange der Windleistungsmesswert $P_{WM}$ innerhalb der Grenzen liegt, die durch den wenigstens einen Grenzgradienten $G_{max}$ vorgegeben werden. Erreicht der Windleistungsmesswert $P_{WM}$ aber die so vorgegebenen Grenzen und überschreitet sie dem Betrage nach, so kann der jeweilige dem Betrage nach überschrittene Grenzwert dann als Einspeiseleistungssollwert $P_{FS}$ verwendet werden. Dieser wird ausgegeben und wieder wird von ihm an dem Summierglied 306 der Windleistungsmesswert $P_{WM}$ abgezogen. Für die Werte, bei denen der Windleistungsmesswert $P_{WM}$ die vorgegebenen Grenzen dem Betrage nach überschritten hat, resultieren somit diese Überschreitungen mit umgekehrtem Vorzeichen als Speicherleistungssollwert $P_{SS}$. Dies wird an die Speicherstation 200 gegeben und diese stellt den Speicherleistungswert $P_S$ entsprechend ein und gleicht somit über Batterieleistung die zu starken Schwankungen des Windes bzw. der Windleistung $P_W$ aus, sodass die Einspeiseleistung $P_F$ innerhalb der vorgegebenen Grenzen bleibt.

Die Vorgabe des wenigstens einen Grenzgradienten $G_{max}$ in Abhängigkeit des Ladezustandes SC kann somit beeinflussen, wie stark zumindest im kurzfristigen Durchschnitt die Windleistung $P_W$ bzw. ihr Messwert $P_{WM}$ einen positiven Grenzwert übersteigt oder einen negativen Grenzwert unterschreitet und kann damit vorgeben, ob die Speicherstation 200 eher eine übersteigende Leistung oder eine unterschreitende Leistung ausgleichen muss. Entsprechend wird sich der Ladezustand verringern oder erhöhen, oder gleichbleiben. Daher wird vorgeschlagen, den Ladezustand SC bei der Berechnung des Grenzgradienten $G_{max}$ mit einzubeziehen. Die Windprognose WP bzw. die Leistungsprognose PP wird ebenfalls berücksichtigt, denn auch davon hängt ab, ob eher eine obere Grenze überschritten oder eine untere Grenze unterschritten wird.

Sowohl der Ladezustand SC als auch die Windprognose WP und/oder Leistungsprognose PP kann auch unmittelbar in dem Einspeiseplanblock 308 berücksichtigt werden. Das kommt besonders dann in Betracht, wenn die Einspeiseleistung $P_F$ nicht nur auf die durch den Grenzgradienten $G_{max}$ vorgegebene Grenzen beschränkt werden soll, sondern gezielter geführt werden soll, insbesondere in einem Bereich etwa in der Mitte zweier vorgegebener Grenzen bzw. zweier vorgegebener Grenzgradienten. Hier kommt besonders in Betracht, dass der Einspeiseplanblock 308 einen Einspeisefahrplan erstellt, demnach nämlich vorhergesagt wird, besonders für einen Planzeitraum vorhergesagt wird, welche Einspeiseleistung $P_F$ eingespeist werden soll. Ein solcher Planzeitraum kann als Zeitraum von einer ersten Zeit $t_1$ bis zu einer zweiten Zeit $t_2$ reichen. Dafür kann ein Einspeisefahrplan erstellt werden und an einen Netzbetreiber ausgegeben werden, damit dieser besser planen kann. Die Ausgabe an einen Netzbetreiber kann die Ausgabe an eine Leitstelle 312 sein. Dies ist in der Regelungsstruktur 300 dadurch angedeutet, dass der Einspeiseplanblock 308 den Einspeisefahrplan $P_F(t_{1...2})$ ausgibt und an die Leitstelle 312 überträgt.

Figur 3 zeigt zudem als weitere Steuerungsmöglichkeit, dass der Einspeiseplanblock 308 einen Zielladezustand SCS bestimmt und bei der Steuerung berücksichtigt. In der Regelungsstruktur 300 ist dies derart berücksichtigt, dass dieser Zielladezustand SCS an die Speicherstation 200 übertragen wird. Die Speicherstation 200 kann dies berücksichtigen und beispielsweise an den Gradientenblock 310 übertragen. Der Zielladezustand SCS kann auch, was gestrichelt angedeutet ist, unmittelbar an den Gradientenblock 310 übertragen werden. Die Übertragung des Zielladezustands SCS an die Speicherstation 200 kann auch erreichen, dass der Zielladezustand SCS unmittelbar mit dem Ladezustand SC verglichen wird. Es kommt dann in Betracht, dass lediglich die Differenz zwischen Ladezustand und Zielladezustand beispielsweise an den Gradientenblock 310 zur weiteren Berechnung übergeben wird.

Eine weitere Verbesserungsmöglichkeit ist in der Regelungsstruktur 300 gezeigt, demnach nämlich der Gradientenblock 310 zusätzlich eine Anzahl durchgeführter Ladezyklen nc berücksichtigt. Die Speicherstation 200 kann diese Ladezyklen nc ermitteln und dem Gradientenblock 310 zur Verfügung stellen. Es kommt auch in Betracht, dass die Auswertung der Ladezyklen nc in dem Einspeiseplanblock 308 erfolgt, was hier nur der Übersichtlichkeit halber nicht eingezeichnet ist.

Durch gestrichelte Linien ist in der Regelungsstruktur 300 angedeutet, dass die Windenergieanlage 100 eine Windprognose WP erhält und eine Leistungsprognose PP ausgibt. Neben Anlageneigenschaften der Windenergieanlage, was oben bereits erläutert wurde, kommt hier auch in Betracht, dass die Windenergieanlage 100 die Windprognose WP jeweils mit tatsächlichen Windwerten vergleicht, die unmittelbar an der Windenergieanlage 100 auftreten. Alternativ können hier auch Leistungen verglichen werden, wenn die Windprognose WP zunächst in eine Leistung umgerechnet wird und diese dann mit der tatsächlichen Leistung an der Windenergieanlage 100 verglichen wird. Dadurch kann eine Abweichung zwischen der von der Wetterstation 302 erstellten Prognose und lokalen Werten an der Windenergieanlage 100 erkannt werden und vorzugsweise wird basierend auf mehreren solcher Abweichungen eine Systematik erkannt und abhängig dieser Systematik die Windprognose WP der Wetterstation 302 angepasst.

Die Regelungsstruktur 300 in Figur 3 zeigt auch, dass die Windenergieanlage 100 und die Speicherstation 200 zusammen an dem Netzanschlusspunkt 118 in das elektrische Versorgungsnetz 120 einspeisen. Das ist zwar eine bevorzugte Ausführungsform und das wird insoweit von einem vorgeschlagenen Windenergiesystem so realisiert, es kommt aber auch in Betracht, dass die Speicherstation deutlich von der wenigstens einen Windenergieanlage getrennt ist, aber in dasselbe elektrische Versorgungsnetz einspeist. Für den Netzbetreiber ist besonders die Leistungsbilanz von Bedeutung, inwieweit sich die insgesamt eingespeiste Leistung also ändert. Abhängig davon, wie stark sich die eingespeiste Leistung ändert, muss der Netzbetreiber Gegenmaßnahmen ergreifen oder nicht. Ob die Windenergieanlage 100 bzw. der Windpark 112 dabei in unmittelbarer Nachbarschaft der Speicherstation 200 angeordnet ist und einspeist, spielt für den Netzbetreiber dabei keine oder keine große Rolle.

Es kommt hinzu, dass besonders das vorgeschlagene Verfahren zum Betreiben und damit Steuern einer Speicherstation auch umgesetzt werden kann, wenn beispielsweise weitere Windenergieanlagen an dem elektrischen Versorgungsnetz 120 hinzukommen. Die Speicherstation kann das berücksichtigen, ohne in unmittelbarer Nähe der Windenergieanlagen bzw. deren Einspeisepunkt angeordnet zu sein. Damit kann die Speicherstation auch in dem erläuterten Sinne betrieben und damit gesteuert werden, wenn mehrere Windenergieanlagen vorhanden sind und berücksichtigt werden, die selbst aber deutlich verteilt sind und über mehrere Netzanschlusspunkte in das elektrische Versorgungsnetz einspeisen. Zur Berücksichtigung benötigt die Speicherstation lediglich Informationen von diesen Windenergieanlagen. Sie benötigt besonders die von allen betrachteten Windenergieanlagen insgesamt eingespeisten Leistung. Diese Summe von allen betrachteten Windenergieanlagen insgesamt eingespeisten Leistung kann dann als Windleistungsmesswert $P_{WM}$ im Sinne der Struktur der Figur 3 verwendet werden.

Ebenso kann in diesem Sinne die Speicherstation betrieben und gesteuert werden, wenn mehrere Windparks vorhanden sind, die ihrerseits auch deutlich getrennt voneinander angeordnet sein können und über mehrere Netzanschlusspunkte in das elektrische Versorgungsnetz einspeisen können.

Es wird somit auch eine Leistungsprognose für einen Windpark auf Basis von lokalen Messdaten berücksichtigt. Das kann eine Windpark-Leistung, Leistungen von Windenergieanlagen, gemessene Windgeschwindigkeiten, Drehzahlen von Windenergieanlagen, Blattwinkel von Windenergieanlagen, Statusinformationen von Windenergieanlagen und von Windparks bzw. von der Speicherstation beinhalten.

Die Leistungsprognose kann entweder für den gesamten Windpark zentral errechnet oder durch einzelne Windenergieanlagen anlagenspezifisch berechnet werden und dann in einer Windpark-Steuerung zusammengeführt werden.

Somit wird eine Nutzung der Windprognose und/oder einer Leistungsprognose für einen oder mehrere der folgenden Anwendungsfälle vorgeschlagen:
Ein Anwendungsfall ist eine Beeinflussung des Ladezustandes der Speicherstation, also eines Energiespeichers der Speicherstation, in Abhängigkeit zu erwartender, nämlich durch die Leistungsprognose prognostizierter Leistungsprofile des Windparks. Darauf basierend kann eine Gradientenglättung durchgeführt oder verbessert werden. Besonders wird vorgeschlagen, bei erwarteten positiven Gradienten des Windparks, also bei erwartetem Anstieg der Leistung des Windparks, einen niedrigeren Ladezustand voreinzustellen, und bei negativen Gradienten entsprechend einen höheren Ladezustand einzustellen.

Auch wird ein Fahrplanbetrieb mit Speicherunterstützung, also mit Unterstützung der Speicherstation vorgeschlagen, besonders die Erstellung eines kurzfristigen Fahrplans auf Basis einer Leistungsprognose, und Absicherung des Fahrplans durch Energiespeicher. Das kann optional durch eine Aktualisierung eines langfristigeren Fahrplans, der auf Basis von numerischen Wetterprognosen erstellt werden kann, noch ergänzt werden.

Eine Prognose der zu erwartenden Lade- und Entladezyklen des Energiespeichers auf Basis der Leistungsprognose zur Einhaltung von Herstelleranforderungen bzgl. einer Lebensdauergarantie wird ebenfalls vorgeschlagen. Besonders soll eine Erhöhung der Effektivität der Energiespeicherregelung der Speicherstation erreicht werden. Das kann besonders angewendet werden zur Vermeidung des Erreichens von Betriebsgrenzen bei lange andauernden Leistungsgradienten, wenn die Speicherstation bzw. ihr Energiespeicher zur Gradientenglättung verwendet wird. Ein weiteres Beispiel ist die Einhaltung der Lebensdauer des Energiespeichers bei möglichst optimaler Ausnutzung der zur Verfügung stehenden Lade- und Entladezyklen.

Auch eine bessere Absicherung eines Fahrplan-Betriebs gegenüber langfristigen oder ungenauen Windleistungsprognosen kann erreicht werden.

**Patentansprüche**

1. Verfahren zum Betreiben einer elektrischen Speicherstation (200) an einem elektrischen Versorgungsnetz (120), und das elektrische Versorgungsnetz (120) weist neben elektrischen Verbrauchern (320, 322) wenigstens

   - die elektrische Speicherstation (200) auf, zum Aufnehmen und Abgeben elektrischer Speicherleistung, und
   - wenigstens eine Windenergieanlage (100), um elektrische Leistung aus Wind zu erzeugen, und das Verfahren
   umfasst die Schritte
   - Erzeugen elektrischer Leistung durch die wenigstens eine Windenergieanlage (100) als erzeugte Windleistung ($P_W$), und
   - Einspeisen einer Einspeiseleistung in das elektrische Versorgungsnetz (120), wobei sich die elektrische Einspeiseleistung ($P_F$) wenigstens ergibt aus

      - der erzeugten Windleistung und
      - einer von der Speicherstation (200) aufgenommenen oder abgegebenen Speicherleistung ($P_S$), wobei
      das Einspeisen der Einspeiseleistung in das elektrische Versorgungsnetz (120)
      - in Abhängigkeit von einem Ladezustand der Speicherstation (200), und
      - in Abhängigkeit von einer Windprognose und/oder von einer Leistungsprognose gesteuert wird, wobei
      - zeitliche Änderungen der Einspeiseleistung in Abhängigkeit von der Windprognose und/oder von der Leistungsprognose gesteuert werden,
      **dadurch gekennzeichnet, dass** für Änderungen der Einspeiseleistung
      - wenigstens ein Grenzgradient ($G_{max}$) vorgegeben wird, um die Änderungen der Einspeiseleistung darauf zu begrenzen, und dass
      - der wenigstens eine Grenzgradient in Abhängigkeit von der Windprognose und/oder von der Leistungsprognose vorgegeben wird.

2. Verfahren nach Anspruch 1,
   **dadurch gekennzeichnet, dass**

   - ein Aufladevorgang der Speicherstation (200) und/oder ein Entladevorgang der Speicherstation (200) als ein Ladezyklus gezählt wird, und
   - in Abhängigkeit von gezählten Ladezyklen die Speicherstation (200) und/oder das Einspeisen der Einspeiseleistung gesteuert wird, wobei insbesondere
   - der wenigstens eine Grenzgradient in Abhängigkeit von den gezählten Ladezyklen vorgegeben wird und/oder
   - in Abhängigkeit von einer bzw. der Leistungsprognose eine Zyklenprognose erstellt wird, die angibt, wie viele Ladezyklen innerhalb einer vorbestimmten Lebensdauer der Speicherstation (200) zu erwarten sind, wobei insbesondere in Abhängigkeit von der Zyklenprognose die Speicherstation (200) und/oder das Einspeisen der Einspeiseleistung gesteuert wird.

3. Verfahren nach Anspruch 1 oder 2,
   **dadurch gekennzeichnet, dass**

   - die Leistungsprognose eine Vorhersage über eine zu erwartende Leistung oder einen zu erwartenden Leistungsverlauf ist, die die wenigstens eine Windenergieanlage (100) in einem Vorhersagezeitraum in das elektrische Versorgungsnetz (120) einspeisen kann, und
   - die Windprognose eine Vorhersage über eine zu erwartende Windgeschwindigkeit oder einen zu erwartenden Windgeschwindigkeitsverlauf ist, die an einer Windenergieanlage (100) oder in einem Windpark (112) in einem Vorhersagezeitraum zu erwarten ist, wobei
   - die Leistungsprognose und/oder die Windprognose außerdem abhängig von lokal erfassten Werten ermittelt oder angepasst wird, wobei die lokal erfassten Werte ausgewählt sind aus der Liste aufweisend

      - eine von der wenigstens einen Windenergieanlage (100) abgegebene Anlagenleistung,
      - eine von einem Windpark (112) abgegebene Windparkleistung, wenn die wenigstens eine Windenergieanlage (100) mit weiteren Windenergieanlagen (100) in einem Windpark (112) betrieben wird,
      - eine von der wenigstens einen Windenergieanlage (100) oder im Bereich der Windenergieanlage (100) oder im Windpark (112) gemessene Windgeschwindigkeit,
      - eine Drehzahl der wenigstens einen Windenergieanlage (100),
- ein Blattwinkel wenigstens eines Rotorblattes (108) der wenigstens einen Windenergieanlage (100), und
- eine Anlagenverfügbarkeit der wenigstens einen Windenergieanlage (100).

4. Verfahren nach Anspruch 3, **dadurch gekennzeichnet, dass** zu einem, mehreren oder allen der lokal erfassten Werte jeweils ein zeitlicher Werteverlauf und/oder eine Wertfolge aufgenommen und/oder berücksichtigt wird.

5. Verfahren nach einem der vorstehenden Ansprüche, **dadurch gekennzeichnet, dass**

    - die Windprognose und/oder die Leistungsprognose

        - abhängig von einer von extern, insbesondere von einem Wetterdienst (302), erhaltenen Wettervorhersage ermittelt wird, und
        - abhängig einer lokalen Anpassungsvorschrift adaptiert wird, wobei die Anpassungsvorschrift besonders unter Berücksichtigung wenigstens eines lokal erfassten Wertes, insbesondere gemäß Anspruch 3 oder 4 adaptiert wird.

6. Verfahren nach einem der vorstehenden Ansprüche, **dadurch gekennzeichnet, dass**

    - zur Bestimmung der Windprognose oder Leistungsprognose mehrere Prädiktionsmodelle verwendet werden, umfassend wenigstens ein zu verwendendes aktuelles Modell und ein Referenzmodell als Referenz zum Anpassen des aktuellen Modells, wobei
    - in einer Lernphase das aktuelle Modell angelernt wird und eine Modellabweichung aufgenommen wird, die eine Abweichung zwischen den Prognosen des aktuellen Modells und des Referenzmodells beschreibt,
    - in einer Anwendungsphase das aktuelle Modell angewendet wird und ebenfalls eine Modellabweichung aufgenommen wird, die eine Abweichung zwischen den Prognosen des aktuellen Modells und des Referenzmodells beschreibt,
    - die Modellabweichung der Anwendungsphase mit der Modellabweichung der Lernphase verglichen wird,
    - und das aktuelle Modell verändert wird, um die Modellabweichung der Anwendungsphase dem Betrage nach zu verringern, wenn die Modellabweichung der Anwendungsphase dem Betrage nach größer war als die Modellabweichung der Lernphase, wobei vorzugsweise

    - das aktuelle Modell eine höhere Ordnung aufweist als das Referenzmodell.

7. Verfahren nach einem der vorstehenden Ansprüche, **dadurch gekennzeichnet, dass**

    - ein Einspeisefahrplan erstellt und zur externen Verwendung ausgegeben wird, insbesondere zur Verwendung von einem Netzbetreiber an den Netzbetreiber ausgegeben wird, wobei der Einspeisefahrplan eine Einspeisung oder mögliche Einspeisung elektrischer Leistung in das elektrische Versorgungsnetz (120) über einen Planzeitraum vorgibt, und der Einspeisefahrplan

        - abhängig der Windprognose und/oder der Leistungsprognose,
        - abhängig lokal erfasster Werte, insbesondere abhängig wenigstens eines lokal erfassten Wertes, insbesondere gemäß Anspruch 3 oder 4, und
        - abhängig des Ladezustandes der Speicherstation erstellt wird, wobei optional
        - der Einspeisefahrplan abhängig des wenigstens einen Grenzgradienten erstellt wird.

8. Verfahren nach einem der vorstehenden Ansprüche, **dadurch gekennzeichnet, dass**

    - für die Windprognose und/oder für die Leistungsprognose eine Prognosegüte bestimmt wird, die eine Abschätzung einer zu erwartenden Abweichung des auftretenden Windes von der Windprognose bzw. der erzeugten Leistung von der Leistungsprognose angibt, und
    - die zeitlichen Änderungen der Einspeiseleistung, insbesondere der wenigstens eine Grenzgradient abhängig der Prognosegüte vorgegeben wird, und/oder
    - ein bzw. der Einspeisefahrplan in Abhängigkeit der Prognosegüte erstellt wird.

9. Verfahren nach einem der vorstehenden Ansprüche, **dadurch gekennzeichnet, dass**

    - für die Speicherstation ein Zielladezustand vorgegeben wird, und
    - der Zielladezustand abhängig der Windprognose und/oder abhängig der Leistungsprognose vorgegeben wird.

10. Windenergiesystem (202) zum Einspeisen elektrischer Leistung in ein elektrisches Versorgungsnetz (120), das mehrere elektrische Verbraucher (320, 322) ausweist, und das Windenergiesystem (202) umfasst

- wenigstens eine Windenergieanlage (100), um elektrische Leistung aus Wind zu erzeugen, und
- wenigstens eine elektrische Speicherstation (200) zum Aufnehmen und Abgeben elektrischer Speicherleistung, und wobei
- die wenigstens eine Windenergieanlage (100) eine Abgabeeinheit (101) aufweist zum Abgeben aus Wind erzeugter elektrischer Leistung als erzeugte Windleistung, und
- das Windenergiesystem (202) eine Einspeiseanordnung aufweist, zum Einspeisen einer Einspeiseleistung in das elektrische Versorgungsnetz (120), wobei sich die elektrische Einspeiseleistung wenigstens ergibt aus

- der erzeugten Windleistung und
- einer von der Speicherstation (200) aufgenommenen oder abgegebenen Speicherleistung, wobei
- eine Steuereinrichtung (203) vorgesehen ist, um das Einspeisen der Einspeiseleistung in das elektrische Versorgungsnetz (120)
- in Abhängigkeit eines Ladezustandes der Speicherstation (200), und

- in Abhängigkeit einer Windprognose und/oder einer Leistungsprognose zu steuern, wobei
- zeitliche Änderungen der Einspeiseleistung in Abhängigkeit der Windprognose und/oder der Leistungsprognose gesteuert werden
**dadurch gekennzeichnet, dass** für Änderungen der Einspeiseleistung
- wenigstens ein Grenzgradient vorgegeben wird, um die Änderungen der Einspeiseleistung darauf zu begrenzen, und dass

- der wenigstens eine Grenzgradient in Abhängigkeit der Windprognose und/oder der Leistungsprognose vorgegeben wird.

11. Windenergiesystem (202) nach Anspruch 10, **dadurch gekennzeichnet, dass** die Steuereinrichtung (203) eine Kommunikationsverbindung (205),

- zur wenigstens einen Windenergieanlage (100),
- zur Speicherstation (200) und
- zu einer Leitstelle (212) des elektrischen Versorgungsnetzes (120)

aufweist, und/oder dass
das Windenergiesystem (202), insbesondere die Steuereinrichtung (203), dazu vorbereitet ist, ein Verfahren gemäß einem der Ansprüche 1 bis 8 auszuführen.

12. Windenergiesystem (202) nach Anspruch 10 oder 11, **dadurch gekennzeichnet, dass**
das Windenergiesystem (202), insbesondere die Steuereinrichtung (203), eine Kommunikationsschnittstelle aufweist, zum Empfangen und automatisierten Auswerten wenigstens einer Wettervorhersage.

**Claims**

1. A method for operating an electrical storage station (200) on an electrical supply network (120), and the electrical supply network (120) has, in addition to electrical consumers (320, 322), at least

- the electrical storage station (200) for taking up and outputting electrical storage power, and
- at least one wind power installation (100) to generate electrical power from wind, and the method
includes the steps of
- generating electrical power by way of the at least one wind power installation (100) as generated wind power ($P_W$), and
- feeding a feed-in power into the electrical supply network (120), wherein the electrical feed-in power ($P_F$) at least results from

- the generated wind power and
- a storage power ($P_S$) taken up or output by the storage station (200), wherein
the feeding of the feed-in power into the electrical supply network (120) is controlled
- depending on a state of charge of the storage station (200), and
- depending on a wind forecast and/or a power forecast, wherein

- changes in the feed-in power over time are controlled depending on the wind forecast and/or on the power forecast, **characterized in that** for changes in the feed-in power
- at least one limit gradient ($G_{max}$) is specified in order to limit the changes in the feed-in power thereto, and that
- the at least one limit gradient is specified depending on the wind forecast and/or on the power forecast.

2. The method as claimed in claim 1, **characterized in that**

- a charging process of the storage station (200) and/or a discharge process of the storage station (200) is counted as a charging cycle, and
- the storage station (200) and/or the feed-in of the feed-in power is controlled depending on counted charging cycles, wherein in particular
- the at least one limit gradient is specified depending on the counted charging cycles and/or
- a cycle forecast is created depending on a or the power forecast, which cycle forecast indicates how many charging cycles are to be expected within a predetermined service life of the storage station (200), wherein the storage station (200) and/or the feed-in of the feed-in power is controlled in particular depending on the cycle forecast.

3. The method as claimed in claim 1 or 2, **characterized in that**

- the power forecast is a prediction of an expected power or an expected power profile which the at least one wind power installation (100) can feed into the electrical supply network (120) in a prediction period, and
- the wind forecast is a prediction of an expected wind speed or an expected wind speed profile which is to be expected at a wind power installation (100) or in a wind farm (112) in a forecast period, wherein
- the power forecast and/or the wind forecast is also determined or adjusted depending on locally recorded values, wherein the locally recorded values are selected from the list comprising

- an installation power that is output by the at least one wind power installation (100),
- a wind farm power that is output by a wind farm (112) if the at least one wind power installation (100) is operated with other wind power installations (100) in a wind farm (112),
- a wind speed measured by the at least one wind power installation (100) or in the region of the wind power installation (100) or in the wind farm (112),
- a rotational speed of the at least one wind power installation (100),
- a blade angle of at least one rotor blade (108) of the at least one wind power installation (100), and
- an installation availability of the at least one wind power installation (100).

4. The method as claimed in claim 3, **characterized in that** a respective time profile of values and/or a sequence of values is recorded and/or taken into account for one, several or all of the locally recorded values.

5. The method as claimed in one of the preceding claims, **characterized in that**

- the wind forecast and/or the power forecast
- is determined depending on a weather forecast obtained externally, in particular from a weather service (302), and
- is adapted depending on a local adjustment rule, wherein the adjustment rule is adapted particularly taking into account at least one locally recorded value, in particular as claimed in claim 3 or 4.

6. The method as claimed in one of the preceding claims, **characterized in that**

- a plurality of prediction models are used to determine the wind forecast or power forecast, said prediction models comprising at least one current model to be used and a reference model as a reference for adjusting the current model, wherein
- the current model is taught in a learning phase and a model deviation, which describes a deviation between the forecasts of the current model and the reference model, is recorded,
- the current model is applied in an application phase and a model deviation, which describes a deviation between the forecasts of the current model and the reference model, is also recorded,
- the model deviation of the application phase is compared with the model deviation of the learning phase,
- and the current model is changed to decrease the model deviation of the application phase in terms of magnitude if the model deviation of the application phase was greater in terms of magnitude than the model deviation of the learning phase, wherein
- the current model preferably has a higher order than the reference model.

7. The method as claimed in one of the preceding claims, **characterized in that**

- a feed-in schedule is created and issued for external use, in particular is issued to a network operator for use by the network operator, wherein the feed-in schedule specifies a feed-in or possible feed-in of electrical power into the electrical supply network (120) over a planning period, and the feed-in schedule is created

- depending on the wind forecast and/or the power forecast,
- depending on locally recorded values, in particular depending on at least one locally recorded value, in particular as claimed in claim 3 or 4, and
- depending on the state of charge of the storage station, wherein
- the feed-in schedule is optionally created depending on the at least one limit gradient.

8. The method as claimed in one of the preceding claims, **characterized in that**

- a forecast quality is determined for the wind forecast and/or for the power forecast, which forecast quality indicates an estimate of an expected deviation of the occurring wind from the wind forecast or the generated power from the power forecast, and
- the changes in the feed-in power over time, in particular the at least one limit gradient, are/is specified depending on the forecast quality, and/or
- a or the feed-in schedule is created depending on the forecast quality.

9. The method as claimed in one of the preceding claims, **characterized in that**

- a target state of charge is specified for the storage station, and
- the target state of charge is specified depending on the wind forecast and/or depending on the power forecast.

10. A wind power system (202) for feeding electrical power into an electrical supply network (120), which comprises a plurality of electrical consumers (320, 322), and the wind power system (202) comprises

- at least one wind power installation (100) to generate electrical power from wind, and
- at least one electrical storage station (200) for taking up and outputting electrical storage power, and wherein
- the at least one wind power installation (100) has an output unit (101) for outputting electrical power generated from wind as generated wind power, and
- the wind power system (202) has a feed-in arrangement for feeding a feed-in power into the electrical supply network (120), wherein the electrical feed-in power results at least from

- the generated wind power and
- a storage capacity taken up or output by the storage station (200), wherein
- a control device (203) is provided in order to control the feed-in of the feed-in power into the electrical supply network (120)
- depending on a state of charge of the storage station (200), and

- depending on a wind forecast and/or a power forecast, wherein
- changes in the feed-in power over time are controlled depending on the wind forecast and/or the power forecast, **characterized in that** for changes in the feed-in power
- at least one limit gradient is specified in order to limit the changes in the feed-in power thereto, and that

- the at least one limit gradient is specified depending on the wind forecast and/or the power forecast.

11. The wind power system (202) as claimed in claim 10, **characterized in that** the control device (203) has a communication link (205)

- to the at least one wind power installation (100),
- to the storage station (200) and
- to a control center (212) of the electrical supply network (120)

and/or **in that**
the wind power system (202), in particular the control device (203), is prepared to carry out a method as claimed in one of claims 1 to 8.

12. The wind power system (202) as claimed in claim 10 or 11, **characterized in that**
the wind power system (202), in particular the control device (203), has a communication interface for receiving and automatically evaluating at least one weather forecast.

**Revendications**

1. Procédé de fonctionnement d'une station de stockage (200) électrique au niveau d'un réseau d'alimentation (120) électrique, et le réseau d'alimentation (120) électrique présente à côté de consommateurs (320, 322) électriques au moins

- la station de stockage (200) électrique pour la réception et la délivrance de puissance de stockage électrique, et
- au moins une éolienne (100) afin de générer la puissance électrique à partir du vent, et le procédé comporte les étapes

- la génération de puissance électrique par l'au moins une éolienne (100) comme puissance du vent ($P_W$) générée, et
- la fourniture d'une puissance d'alimentation dans le réseau d'alimentation (120) électrique, dans lequel la puissance d'alimentation ($P_F$) électrique résulte au moins de

- la puissance du vent générée et
- une puissance de stockage ($P_S$) reçue ou délivrée par la station de stockage (200), dans lequel la fourniture de la puissance d'alimentation dans le réseau d'alimentation (120) électrique est commandée

- en fonction d'un état de charge de la station de stockage (200), et
- en fonction d'une prévision du vent et/ou d'une prévision de puissance, dans lequel

- des modifications temporelles de la puissance d'alimentation sont commandées en fonction de la prévision du vent et/ou de la prévision de puissance, **caractérisé en ce que**, pour des modifications de la puissance d'alimentation,
- au moins un gradient limite ($G_{max}$) est prédéfini afin de limiter les modifications de la puissance d'alimentation à celui-ci, et que
- l'au moins un gradient limite est prédéfini en fonction de la prévision du vent et/ou de la prévision de puissance.

**2.** Procédé selon la revendication 1, **caractérisé en ce que**

- un processus de charge de la station de stockage (200) et/ou un processus de décharge de la station de stockage (200) est compté comme un cycle de charge, et
- en fonction des cycles de charge comptés la station de stockage (200) et/ou l'alimentation de la puissance d'alimentation est commandée, dans lequel en particulier
- l'au moins un gradient limite est prédéfini en fonction des cycles de charge comptés et/ou
- en fonction d'une ou de la prévision de puissance une prévision de cycle est établie, laquelle indique combien de cycles de charge sont à attendre dans une durée de vie prédéterminée de la station de stockage (200), dans lequel, en particulier en fonction de la prévision de cycle, la station de stockage (200) et/ou la fourniture de la puissance d'alimentation est commandée.

**3.** Procédé selon la revendication 1 ou 2, **caractérisé en ce que**

- la prévision de puissance est une prédiction sur une puissance à attendre ou une étendue de puissance à attendre que peut fournir l'au moins une éolienne (100) dans une période de prédiction dans le réseau d'alimentation (120) électrique, et
- la prévision du vent est une prédiction sur une vitesse du vent à attendre ou une étendue de vitesse du vent à attendre qui est à attendre au niveau d'une éolienne (100) ou dans un parc éolien (112) dans une période de prédiction, dans lequel
- la prévision de puissance et/ou la prévision du vent est calculée ou adaptée en outre en fonction de valeurs détectées localement, dans lequel les valeurs détectées localement sont sélectionnées à partir de la liste présentant
- une puissance d'éolienne délivrée par l'au moins une éolienne (100),
- une puissance de parc éolien délivrée par un parc éolien (112) lorsque l'au moins une éolienne (100) fonctionne avec d'autres éoliennes (100) dans un parc éolien (112),
- une vitesse du vent mesurée par l'au moins une éolienne (100) ou dans la zone de l'éolienne (100) ou dans le parc éolien (112),
- une vitesse de rotation de l'au moins une éolienne (100),
- un angle de pale d'au moins une pale de rotor (108) de l'au moins une éolienne (100), et
- une disponibilité d'éolienne de l'au moins une éolienne (100).

**4.** Procédé selon la revendication 3, **caractérisé en ce que** respectivement une étendue de valeur temporelle et/ou une suite de valeurs est reçue et/ou prise en compte pour une, plusieurs ou toutes les valeurs détectées localement.

**5.** Procédé selon l'une des revendications précédentes, **caractérisé en ce que**

- la prévision du vent et/ou la prévision de puissance
- est calculée en fonction d'une prédiction de temps obtenue en externe, en particulier par un service météorologique (302), et
- est adaptée en fonction d'une prédéfinition d'adaptation locale, dans lequel la prédéfinition d'adaptation est adaptée particulièrement en tenant compte d'au moins une valeur détectée localement, en particulier selon la revendication 3 ou 4.

**6.** Procédé selon l'une des revendications précédentes, **caractérisé en ce que**

- pour la détermination de la prévision du vent ou prévision de puissance, plusieurs modèles de prédiction sont utilisés, comprenant au moins un modèle actuel à utiliser et un modèle de référence comme référence pour l'adaptation du modèle actuel, dans lequel

- dans une phase d'apprentissage, le modèle actuel est appris et un écart de modèle est enregistré, lequel décrit un écart entre les prévisions du modèle actuel et du modèle de référence,

- dans une phase d'application, le modèle actuel est appliqué et un écart de modèle est aussi enregistré, lequel décrit un écart entre les prévisions du modèle actuel et du modèle de référence,

- l'écart de modèle de la phase d'application est comparé avec l'écart de modèle de la phase d'apprentissage,

- et le modèle actuel est modifié afin de diminuer l'écart de modèle de la phase d'application en ce qui concerne la valeur lorsque l'écart de modèle de la phase d'application en ce qui concerne la valeur était supérieur à l'écart de modèle de la phase d'apprentissage, dans lequel de préférence

- le modèle actuel présente un ordre supérieur à celui du modèle de référence.

7. Procédé selon l'une des revendications précédentes,
   **caractérisé en ce que**

   - un horaire d'alimentation est établi et délivré à l'exploitant de réseau pour l'utilisation externe, en particulier pour l'utilisation par un exploitant de réseau, dans lequel l'horaire d'alimentation prédéfinit une alimentation ou alimentation possible de puissance électrique dans le réseau d'alimentation (120) électrique sur une période planifiée, et l'horaire d'alimentation

   - est établi en fonction de la prévision du vent et/ou de la prévision de la puissance,

   - en fonction de valeurs détectées localement, en particulier en fonction d'au moins une valeur détectée localement, en particulier selon la revendication 3 ou 4, et

   - en fonction de l'état de charge de la station de stockage, dans lequel en option

   - l'horaire d'alimentation est établi en fonction d'au moins un gradient limite.

8. Procédé selon l'une des revendications précédentes,
   **caractérisé en ce que**

   - pour la prévision du vent et/ou pour la prévision de puissance, une qualité de prévision est déterminée, laquelle indique une estimation d'un écart à attendre du vent survenant de la prévision du vent ou de la puissance générée de la prévision de puissance, et

- les modifications temporelles de la puissance d'alimentation, en particulier l'au moins un gradient limite est prédéfini en fonction de la qualité de prévision, et/ou

- un ou l'horaire d'alimentation est établi en fonction de la qualité de prévision.

9. Procédé selon l'une des revendications précédentes,
   **caractérisé en ce que**

   - pour la station de stockage, un état de charge cible est prédéfini, et

   - l'état de charge cible est prédéfini en fonction de la prévision du vent et/ou en fonction de la prévision de puissance.

10. Système éolien (202) pour la fourniture de puissance électrique dans un réseau d'alimentation (120) électrique qui présente plusieurs consommateurs électriques (320, 322), et le système éolien (202) comporte

    - au moins une éolienne (100) afin de générer de la puissance électrique à partir du vent, et

    - au moins une station de stockage (200) électrique pour la réception et la délivrance de puissance de stockage électrique, et dans lequel

    - l'au moins une éolienne (100) présente une unité de délivrance (101) pour la délivrance de puissance électrique générée à partir du vent comme puissance du vent générée, et

    - le système éolien (202) présente un agencement de fourniture pour la fourniture d'une puissance d'alimentation dans le réseau d'alimentation (120) électrique, dans lequel la puissance d'alimentation électrique résulte au moins de

      - la puissance du vent générée et

      - une puissance de stockage reçue ou délivrée par la station de stockage (200), dans lequel

      - un dispositif de commande (203) est prévu afin de commander la fourniture de la puissance d'alimentation dans le réseau d'alimentation (120) électrique

    - en fonction d'un état de charge de la station de stockage (200), et

      - en fonction d'une prévision du vent et/ou d'une prévision de puissance, dans lequel

      - des modifications temporelles de la puissance d'alimentation sont commandées en fonction de la prévision du vent et/ou de la prévision de puissance, **caractérisé en ce que**, pour des modifications de la puissance d'alimentation,

- au moins un gradient limite est prédéfini afin de limiter les modifications de la puissance d'alimentation à celui-ci, et que

- l'au moins un gradient limite est prédéfini en fonction de la prévision du vent et/ou de la prévision de puissance.

11. Système éolien (202) selon la revendication 10, **caractérisé en ce que** le dispositif de commande (203) présente une liaison de communication (205)

   - avec au moins une éolienne (100),
   - avec la station de stockage (200) et
   - avec un centre de contrôle (212) du réseau d'alimentation (120) électrique, et/ou que

le système éolien (202), en particulier le dispositif de commande (203), est préparé afin de réaliser un procédé selon l'une des revendications 1 à 8.

12. Système éolien (202) selon la revendication 10 ou 11, **caractérisé en ce que**
le système éolien (202), en particulier le dispositif de commande (203), présente une interface de communication pour la réception et l'évaluation automatisée d'au moins une prédiction météorologique.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011140111 A2
- DE 102014221555 A1
- US 20110221276 A1
- US 20140184136 A1
- US 20190052088A1 A
- EP 3007302 A1
- US 20180223804 A1
- US 2014200723 A1